# EUROPEAN PATENT APPLICATION

(11) **EP 1 345 418 A2**
(43) Date of publication of application: **17.09.2003**
(21) Application number: 03251257.6
(22) Date of filing: 03.03.2003
(51) Int. Cl.: H04N 5/00, H04N 7/24

(54) **Reception apparatus**

(30) Priority: 12.03.2002 JP 2002066892
(71) Applicant: CANON KABUSHIKI KAISHA, Tokyo (JP)
(72) Inventor: Maruyama, Kazuna, Canon Kabushiki Kaisha, Tokyo (JP)
(74) Representative: Beresford, Keith Denis Lewis

(57) **Abstract**

A receiving apparatus for receiving a television broadcast wave including broadcast data described by a structured document, capable of processing the structured document of the received broadcast data to generate image data for display, selecting an arbitrary area in a display image of the broadcast data and generating selected structured document data for displaying the selected area in the structured document of the received broadcast data, on the basis of the structured document of a portion corresponding to the selected area.

## Description

### BACKGROUND OF THE INVENTION

### Field of the Invention

The present invention relates to a reception apparatus, and more particularly to a processing for data transmitted in digital television broadcasting. Related Background Art

Present BS digital broadcasting employs an MPEG2 transport stream for transmission, and transmits image data and audio data of a broadcast program, data of data broadcasting, a character screen or character data to be displayed in superposition with an image of a broadcast program etc. in the unit of a packet.

The data handled in the data broadcasting include BML (broadcast markup language) document data described in a contents description language of the data broadcasting, and moving image data, still image data, audio data and media data such as character data, referred to by such BML document.

A television receiver having a function of receiving the data broadcasting decodes the BML document data transmitted in the data broadcasting channel to generate a display image. Also the user can execute various controls such as a switching of the displayed image, by operating a remote controller while watching such data broadcast image.

Also a digital television receiver, not merely receiving and displaying a television broadcasting, but is recently proposed in a configuration of incorporating a storage such as a hard disk and storing data of the received digital television broadcasting in the storage for reproduction and viewing in a later time.

However, in such conventional receiver provided with such storage, it has not been possible to extract only a part of the display image of the data broadcasting for display in the storage. Therefore, in case it is desired to store only a part of the displace image described as a BML document, it has been necessary to store all the data of the data broadcasting program including such BML document in the storage.

Also it has not been possible to display and store selectively an arbitrary element of a structured document, so that a secondary utilization of such element has not been possible.

### SUMMARY OF THE INVENTION

A concern of the present invention is to solve these drawbacks.

Another concern of the present invention is to enable extraction and storage of a part only of data of a data broadcasting described in a structured document.

According to an aspect of the
present invention there is provided a
reception apparatus including:
reception means which receives a television broadcast wave including broadcast data described by a structured document;
broadcast data processing means which processes a structured document of the broadcast data received by the reception means to generate image data for display;
selection means which selects an arbitrary area in a display image corresponding to the broadcast data received by the reception means; and
generation means which generates selected structured document data for executing a display of the selected area in the structured document in the received broadcast data, based on the structured document in a portion corresponding to the selected area.

Still other advantages of the present invention, and the features thereof, will become fully apparent from the detailed description of embodiments of the present invention, to be taken in conjunction with the accompanying drawings.

### BRIEF DESCRIPTION OF THE DRAWINGS

Fig. 1 is a view showing a television receiver in which the present invention is applicable;
Fig. 2 is a view showing a configuration of a data broadcast processing circuit;
Fig. 3 is a view showing a configuration of a BML browser;
Fig. 4 is a view showing a display image screen of a data broadcast program;
Fig. 5 is a view showing a configuration of a BML document;
Fig. 6 is a view showing a remote controller;
Fig. 7 is a flow chart showing an extraction process for a data broadcast program;
Fig. 8 is a view showing a BML document in a data broadcast;
Fig. 9 is a view showing a state of a display screen at the extraction of a data broadcast program;
Fig. 10 is a view showing a template BML document for storage;
Fig. 11 is a flow chart showing a storage process of an extracted BML document;
Fig. 12 is a view showing a BML document for storage;
Fig. 13 is a view showing a state of a display screen for profile registration;
Fig. 14 is a view showing a BML document for registration;
Fig. 15 is a flow chart showing a registration process for profile data;
Fig. 16 is a view showing a state of a profile table;
Fig. 17 is a view showing a state of a retrieving image;
Fig. 18 is a view showing a state of the display screen by a stored BML document;
Fig. 19 is a view showing another BML document for registration;
Fig. 20 is a view showing a state of the profile table;
Fig. 21 is a view showing another configuration of the data broadcast processing circuit;
Fig. 22 is a flow chart showing a retrieval process for the BML document for storage;
Fig. 23 is a view showing a result BML document;
Fig. 24 is a view showing an example of the result BML document;

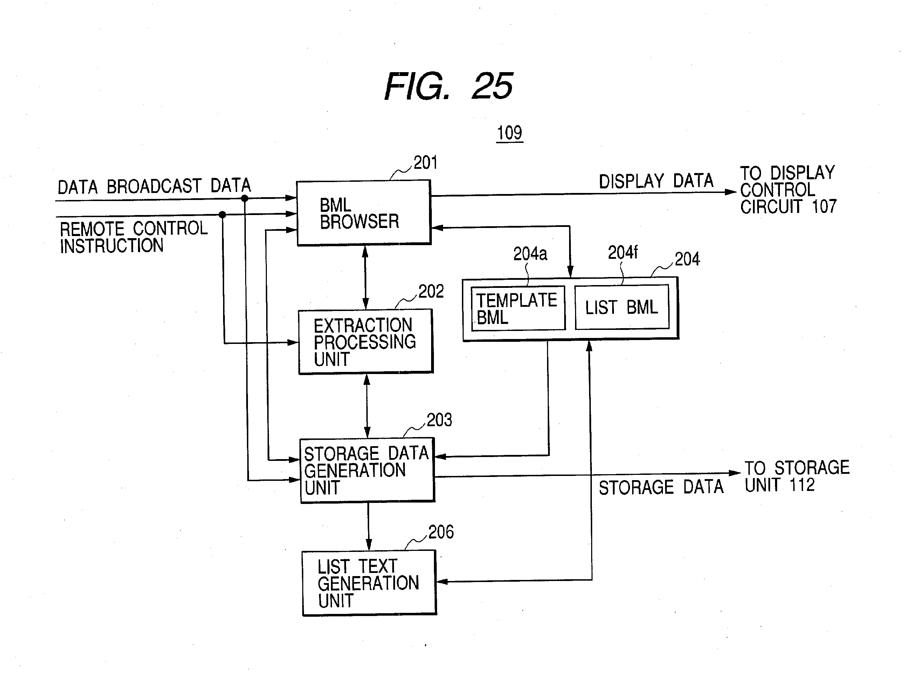

Fig. 25 is a view showing another configuration of the data broadcast processing circuit;
Fig. 26 is a view showing a state of the remote controller;
Fig. 27 is a view showing another template BML document;
Fig. 28 is a view showing another template BML document;
Fig. 29 is a view showing a BML document for storage;
Fig. 30 is a view showing a BML document for browsing;
Fig. 31 is a view showing a BML document for browsing;
Fig. 32 is a view showing a state of the display screen for browsing;
Fig. 33 is a view showing a state of the display screen by a stored BML document;
Fig. 34 is a view showing another BML document for browsing;
Fig. 35 is a view showing another BML document for browsing;
Fig. 36 is a view showing a BML document for browsing;
Fig. 37 is a view showing a BML document for browsing;
Fig. 38 is a view showing another configuration of the data broadcast processing circuit;
Fig. 39 is a flow chart showing an extraction process for a BML document;
Fig. 40 is a view showing a state of CSS characteristics;
Fig. 41 is a view showing a BML document for storage;
Fig. 42 is a view showing a BML document for storage;
Fig. 43 is a view showing another configuration of the data broadcast processing circuit;
Fig. 44 is a view showing a state of reference data;
Fig. 45 is a view showing a BML document referring to monomedia data;
Fig. 46 is a view showing another configuration of a television receiver in which the present invention is applicable; and
Fig. 47 is a view showing another configuration of the data broadcast processing circuit;

### DETAILED DESCRIPTION OF THE PREFERRED EMBODIMENTS

### First embodiment

In the following, there will be explained an embodiment of the present invention.

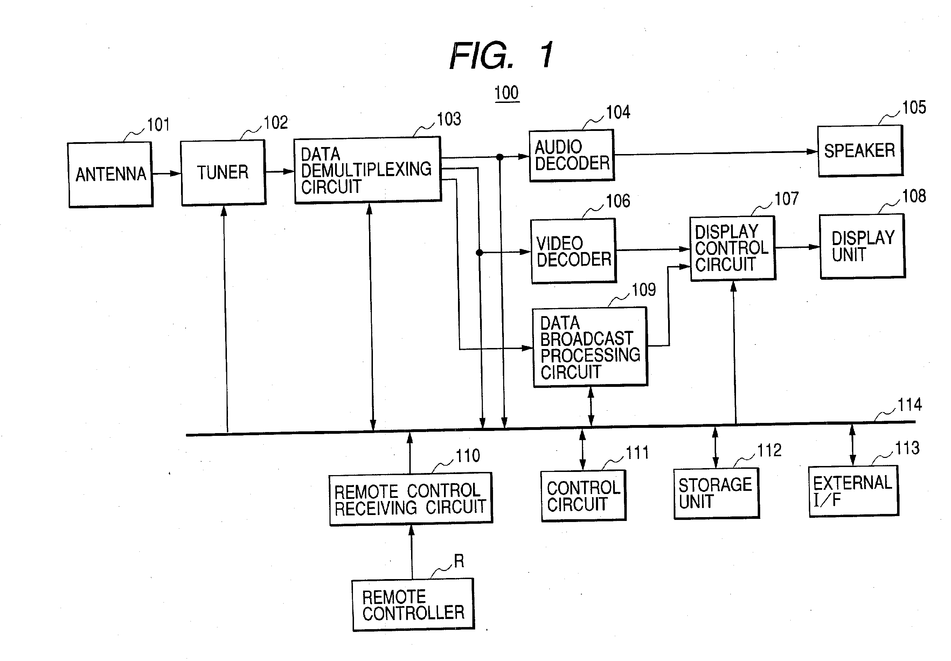

Fig. 1 is a view showing a configuration of a digital television receiver 100 in which the present invention is applicable. At first there will be explained a reception operation by the receiver 100 shown in Fig. 1.

Referring to Fig. 1, a television broadcast wave received by an antenna 101 is supplied to a tuner 102. The tuner 102 outputs, among the received television broadcast wave, an MPEG2 transport stream of a designated channel to a data separation circuit 103. Based on an ID of each packet of the transport stream outputted from the tuner 102, the data separation circuit 103 detects audio/image data packet and a data broadcast packet of the designated channel, and outputs these respectively to an audio decoder 104, an image decoder 106 and a data broadcast processing circuit 109.

The audio decoder 104 decodes the audio data and executes an output to a speaker 105. Also the image decoder 106 decodes the image data and executes an output to a display control circuit 107. Also the data broadcast processing circuit 109 processes data broadcast data as will be explained later, then outputs data of a display screen to the display control circuit 107, also generates data for storage and outputs the data to a storage unit 112 through a data bus 114. The display control circuit 107, according to an instruction from a control circuit 111, generates data of a display screen based on display image data from the image decoder 106 or the data broadcast processing circuit 109 and outputs the generated data to a display unit 108.

A remote control reception circuit 110 outputs a control command, outputted from a remote controller R, to the control circuit 111 through a data bus 114. According to a user command from the remote controller R, the control circuit 111 controls a reception process such as a reception channel switching process by the tuner 102 and the data separation circuit 103, and also control a generation process for storage data by the data broadcast processing circuit 109.

A storage unit 112 including a hard disk records image and audio data packets outputted from the data separation circuit 103 and data broadcast data for storage generated by the data broadcast processing circuit 109. An external interface 113 executes input/output of image, audio and other data with an external equipment such as a digital camera or a personal computer.

In the following there will be given an explanation on the data broadcast processing circuit 109 which is a featuring configuration of the present embodiment.

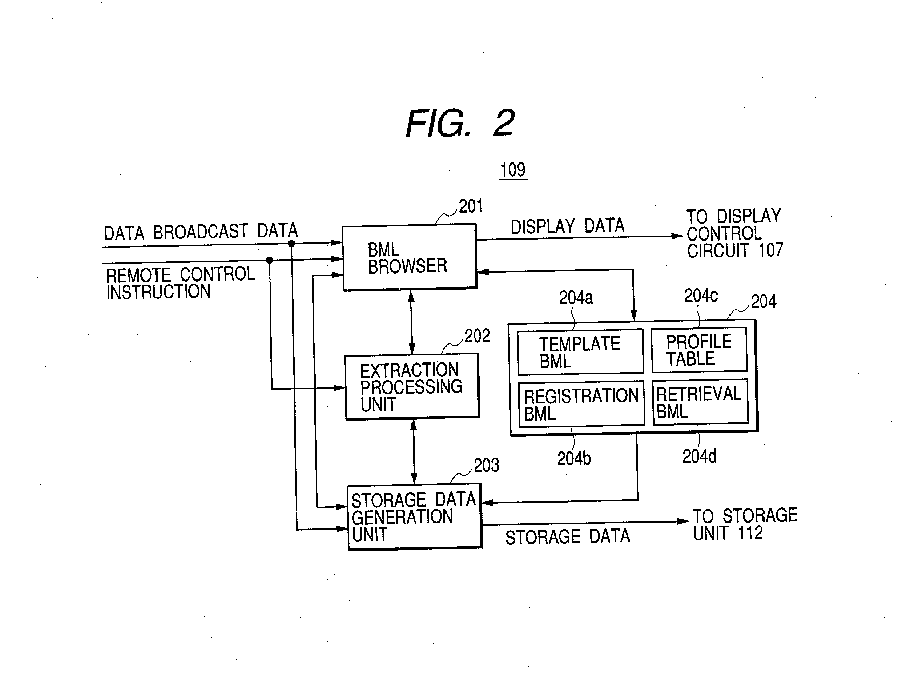

Fig. 2 is a view showing a configuration of the data broadcast processing circuit 109. Referring to Fig. 2, data broadcast data are outputted to a BML browser 201 and storage data generation unit 203, and a control command from the remote controller R is outputted to the BML browser 201 and an extraction process unit 202.

The BML browser 201 processes the data broadcast data described by a BML document. In the following there will be given a description on the BML browser 201. The BML browser deals with a BML document and monomedia data referred by the BML document. The monomedia data includes JPEG, PNG and MNG as a still image, MPEG1 and MPEG2 as a moving image, MPEG2-AAC and AIFF as audio data, and an 8-unit code as a text.

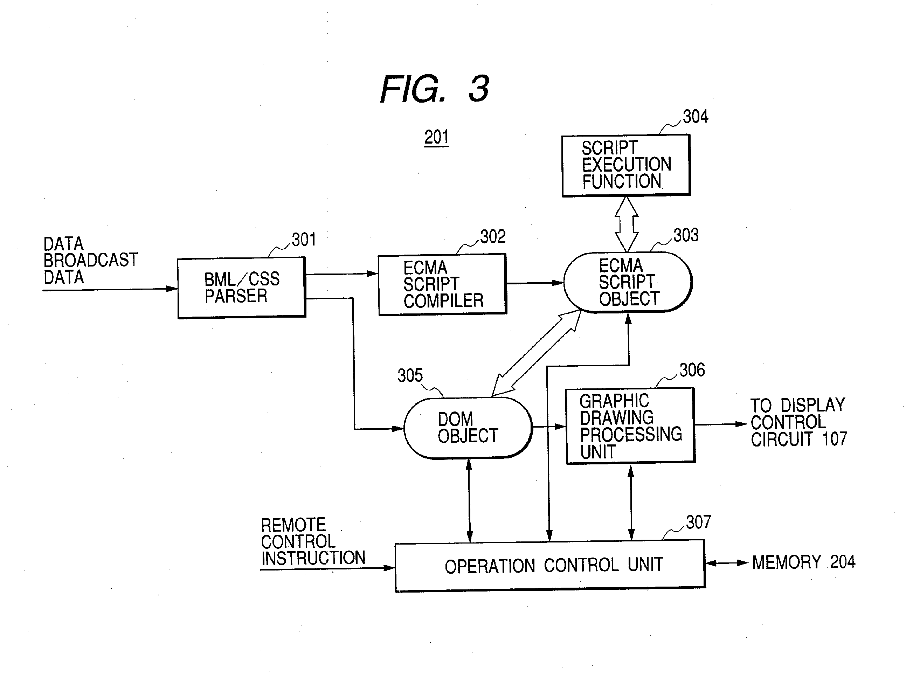

Fig. 3 is a view showing a configuration of the BML browser 201. Referring to Fig. 3, the input data broadcast data are outputted to a BML/CSS parser. The BML/CSS parser 301 analyses the BML document in the data broadcast data to generate internal data called a DOM object 305. More specifically it analyses style information described in the BML document to obtain CSS characteristics, which constitute a part of the DOM object 305. The CSS characteristics are characteristics for designating arrangement of elements in the BML document, a background color and a focus movement destination thereof.

The DOM object 305 is data including structure information of the BML document and attribute information of various elements thereof, in addition to the CSS characteristics, and such attribute information includes a designation of display/non-display of an element, and a designation of an event generated corresponding to a depressed remote control key or a focus movement. The DOM object 302 including the CSS characteristics is transferred to a drawing process unit 306 for generating data for a display image screen.

Also the BML/CSS parser transfers script information, descried in the BML document, to an ECMAS script compiler 302. The ECMAS script compiler 302 compiles script information described in the ECMAS script thereby generating an executable ECMAS script object 303 as internal data. The ECMAS script object 303 is a group of functions which is defined by the BML document at a preparing side of the BML document, namely at a transmission side of the data broadcast.

The ECMAS script object 303, which is a function group defined by the transmitter of the data broadcast, can call a script execution function 304 which is always held by a reception apparatus designed for the data broadcast. Such script execution function 304 includes a broadcast object group and a broadcast expansion function. The broadcast expansion object group is an object group for handling table data, thereby achieving an extraction or a retrieval of transmitted table data. The broadcast expansion function is a function group added to the ECMAS script in order to realize a function specific to the broadcasting, thereby allowing to handle functions specific to the broadcasting, such as an electronic program table (EPG), a character image screen, an interactive function, an additional character handling function, a timer function etc. These ECMAS script object 303 and DOM object 305 in practice are stored in an internal memory of the BML browser for use.

An operation control unit 307 executes a remote control key control, a focus movement and an image frame transition of the data broadcast image, and an even processing. The DOM object 305 and the ECMAS script object 303 derived from the BML document corresponding to the data broadcast under display are data used as a guideline when the operation control unit 307 executes a focus movement, an image transition or an event processing generated for example by an operation of the remote controller.

For example, in case a button positioned on the display screen is selected by a depression of a decision key of the remote controller, the operation control unit 307 calls style information etc. in case a focus is given, from the CSS characteristics of an element of the DOM object 305 corresponding to the button, also a script in case a focus is given and a script in case the decision key is depressed, from the attribute information of an element corresponding to the button, and a corresponding function from the ECMAS script object 303, thereby executing an operation control at the selection of such button.

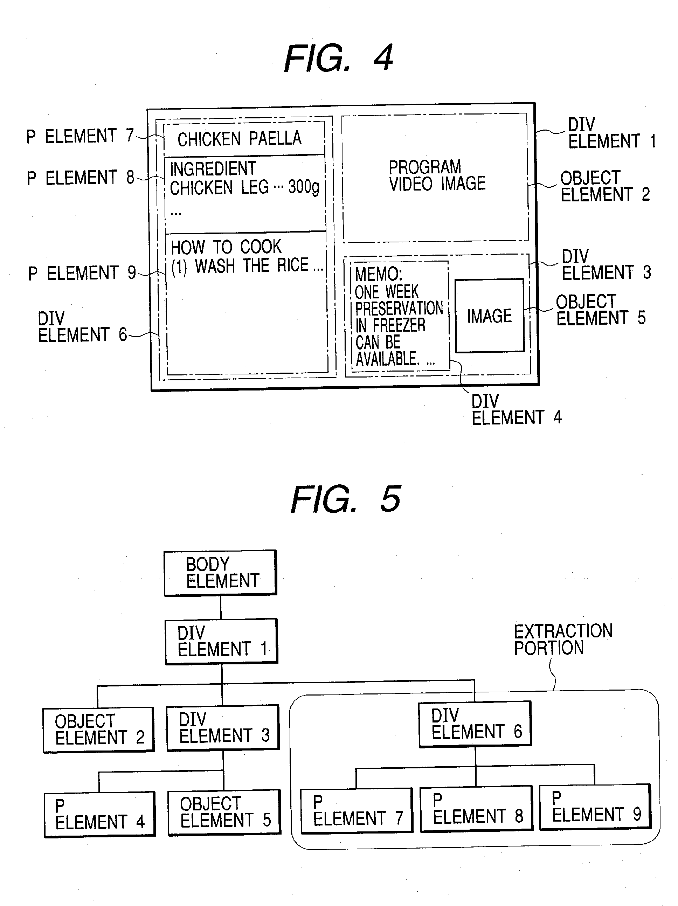

Fig. 4 shows an example of the image screen of a data broadcast program under reception. The displayed image shown in Fig. 4 is generated by the drawing process unit 306 based on the DOM object 305 generated in the BML browser 201, and displayed by the display control unit 107 on a display unit 108.

Referring to Fig. 4, a div element 1 is positioned over the entire area of the display image screen, and, in the image on the div element 1, there are positioned an object element 2 in an upper right portion, a div element 3 in a lower right portion and a div element 6 in a left portion. Also on the div element 2 at the lower right portion of the image, there are provided a p element 4 and an object element 5, and, on the div element 6 at the left of the image, there are provided a p element 7, a p element 8 and a p element 9.

Fig. 5 shows the image configuration of Fig. 4 in a tree structure. Information of the tree structure is one of the information held by the DOM object 305. Referring to Fig. 4, seen from the div element 6, the div element 1 is called a parent element; the p element 7, the p element 8 and the p element 9 are called children elements; and the object element 2 and the object element 3 are called brother elements.

In the present embodiment, each element shown in Fig. 4 is extracted and stored in a form of a BML document. In the following there will be explained a process for generating data for storage by the data broadcast processing circuit 109 shown in Fig. 2.

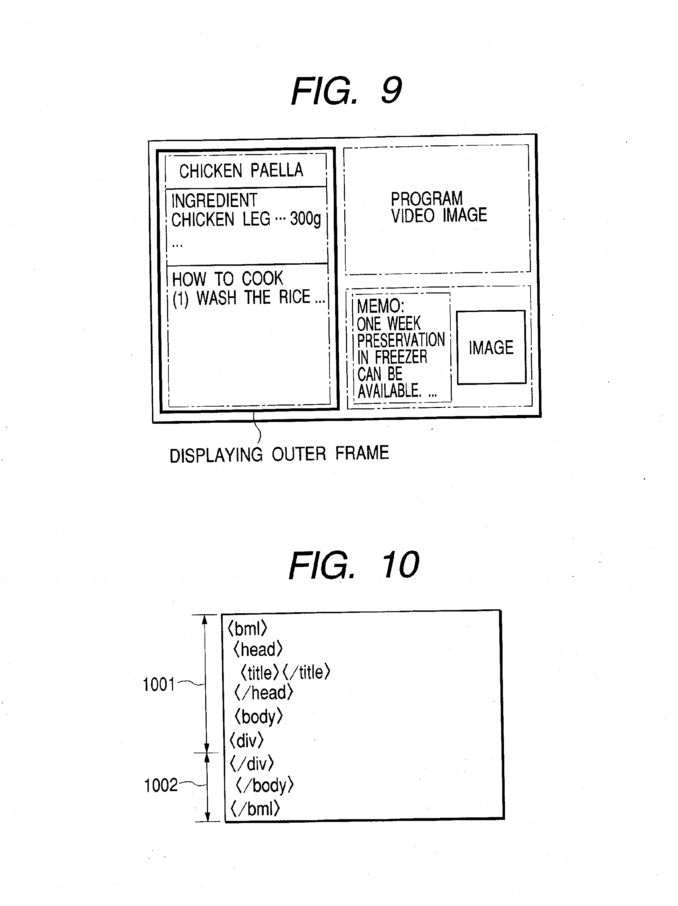

In case an extraction key of the remote controller R is operated during a display of the data broadcast data, there is initiated an extraction process for an element to be stored. The remote controller R is provided, as shown in Fig. 9, with an extraction key 901, numeral keys 602, a data broadcast reception key 603, a return key 604, a decision key 605, direction keys 606, a color key 607 and other various keys.

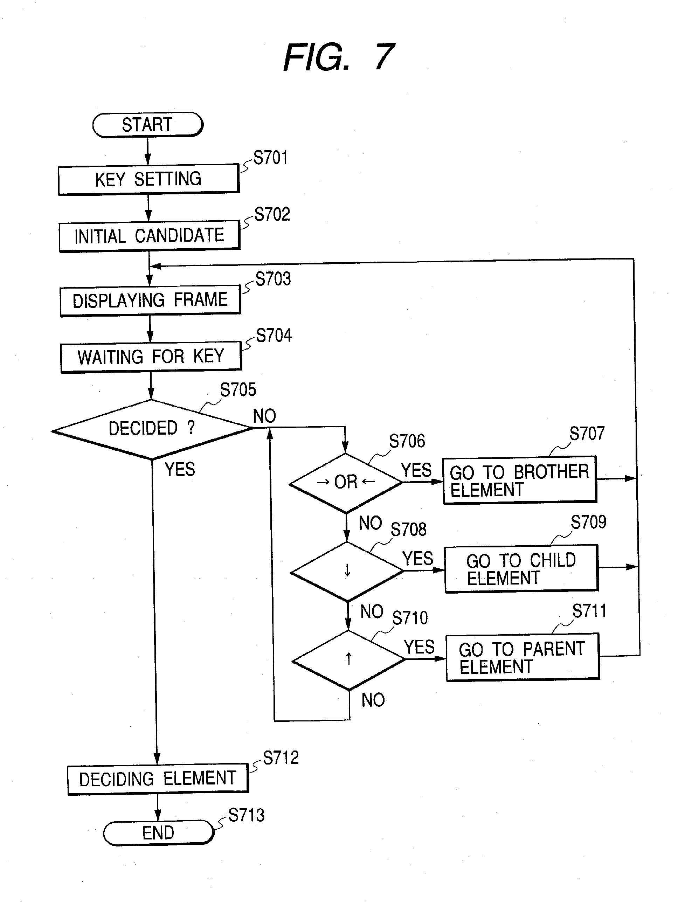

Fig. 7 is a flow chart showing an extraction process for data broadcast data for storage by an extraction process unit 202 in Fig. 2.

When the extraction key 601 is operated, the extraction process unit 202 enables, among the plural keys provided in the remote controller R, the direction keys 606 and the decision key 605 as effective for the extraction process and deactivates other keys (step S701). Then an element extraction process is executed with these effective keys. The BML document subjected to the extraction process is assumed to be displayed as shown in Fig. 4 and to have a tree structure as shown in Fig. 5. It is also assumed that the extraction is executed on a lefthand portion of the image shown in Fig. 4, namely a framed portion in Fig. 5.

Then structured document information (DOM object 305) generated and held as internal data by the BML browser 201 is used to specify an initial element of extraction candidates, from displayable elements, namely a body element, an object element, a div element, a p element, an input element, a span element and an a element (step S702). It is assumed that, in the present case, a div element which is a first child element of the body element is specified as the initial extraction candidate.

Then the drawing control unit 306 of the BML browser 201 is so controlled as to display an outer frame on the element of the extraction candidate, thereby visually clarifying a portion constituting the extraction candidate on the displayed image (step S703). Such frame display is executed by obtaining, from the DOM object 305, a left property, a top property, a width property and a height property of the style information relating to the element constituting the extraction candidate. When the frame display is given on the element constituting the extraction candidate, the sequence enters a waiting state for a key operation of the remote controller R (step S704).

In case the decision key 605 of the remote controller R is operated (step S705), the element currently constituting the extraction candidate and all the children elements thereof are decided as extraction elements (step S712). In case the operated key is not the decision key 605, the process differs according to the operated key. In case a rightward arrow key or a leftward arrow key is operated (step S706), brother elements of the current extraction candidate element are specified from the DOM object 305 and one of such elements is decided as a new extraction candidate (step S707).

More specifically, in case the rightward arrow key is operated, a brother element described next to the element of the current extraction candidate is selected as a new extraction candidate, but if such element does not exist, the extraction candidate is not moved. Also in case the leftward arrow key is operated, a brother element described before the element of the current extraction candidate is selected as a new extraction candidate, but if such element does not exist, the extraction candidate is not moved.

When a new extraction candidate is specified or it is decided that the extraction candidate does not move because of the absence of a suitable brother element, an outer frame display is executed on the extraction candidate and the sequence enters a waiting state for a key operation.

Also in case a downward arrow key is operated (step S708), children elements of the current extraction candidate element are specified from the DOM object 305, and one of such elements is selected as a new extraction candidate (step S709). In case plural children elements are present, an element described at first is selected as a new extraction candidate, but in case a child element does not exist, the extraction candidate is not moved. When a new extraction candidate is specified or it is decided that the extraction candidate does not move because of the absence of a child element, an outer frame display is executed on the extraction candidate and the sequence enters a waiting state for a key operation.

Also in case an upward arrow key is operated (step S710), a parent element of the current extraction candidate element is specified from the DOM object 305, and is selected as a new extraction candidate (step S711). In case the parent element is a body element, the extraction candidate is not moved. When a new extraction candidate is specified or it is decided that the extraction candidate does not move because the parent element is a body element, an outer frame display is executed on the extraction candidate and the sequence enters a waiting state for a key operation.

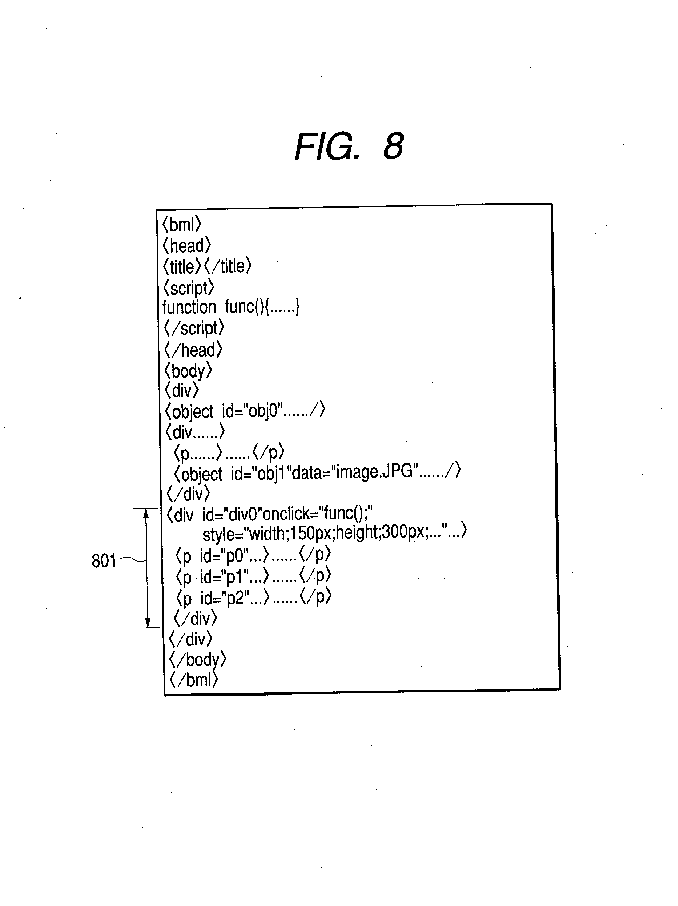

In the example shown in Figs. 4 and 5, in which the BML document constituting the extraction target has a structure as shown in Fig. 8, the extraction candidate is set at the div element 1 as the initial element, then moves to the object element 2 by an operation of the downward arrow key, then moves to the div element 3 by an operation of the rightward arrow key, and further moves to the div element 6 by an operation of the rightward arrow key again, and the div element 6 and the p element 7, the p element 8 and the p element 9 which are the children elements thereof, are decided by an operation of the decision key as the extraction candidate elements. The displayed image before the decision key operation is as shown in Fig. 9.

As explained in the foregoing, an arbitrary element in the BML document subjected to the extraction process can be selected as an extraction element by operating the arrow keys and the decision key of the remote controller R. In the foregoing, a body element is not selected as an extraction candidate, but it is also possible select a body element as an extraction candidate. Also the remote controller keys effective for the extraction process are assumed to be the arrow keys and the decision key, but it is also possible for example to enable a return key 604 and to execute a process of selecting an element of a prior extraction candidate as a new extraction candidate in response to an operation of such enabled key.

When the extraction element is decided in the extraction target BML document, a storage data generation unit 203 generates a BML document for storage, based on such extraction element. Displayable elements required for the storage BML document are a body element and a decided extraction element. Also a BML document having minimum necessary elements only among the BML document processable by the BML browser 201 is a document shown in Fig. 10 from which div elements are excluded.

Among the displayable elements of the BML document, namely among the body element, object element, div element, p element, input element, span element and a element, only the div element and the p element can become a child element of the body element. Other element, namely the object element, input element, span element and a element have to be a child element of a div element. Since the div element or the p element can also become a child element of a div element, the div element can have, as children elements, all the displayable elements of the BML document, except the body element.

Therefore, among the BML documents processable by the BML browser 201, a BML document shown in Fig. 10 has minimum necessary elements settable among all the displayable elements, and a BML document having such predetermined format (pattern) is called a storage template BML document. A div element described in such storage template BML document is assumed to contain style information for designating the entire displayable area of the image screen.

The storage data generation unit 203 generates storage BML document data, utilizing such storage template BML document, an extraction target BML document, a DOM object 305 based on the extraction target BML document, and extraction element information decided in the extraction process unit 202.

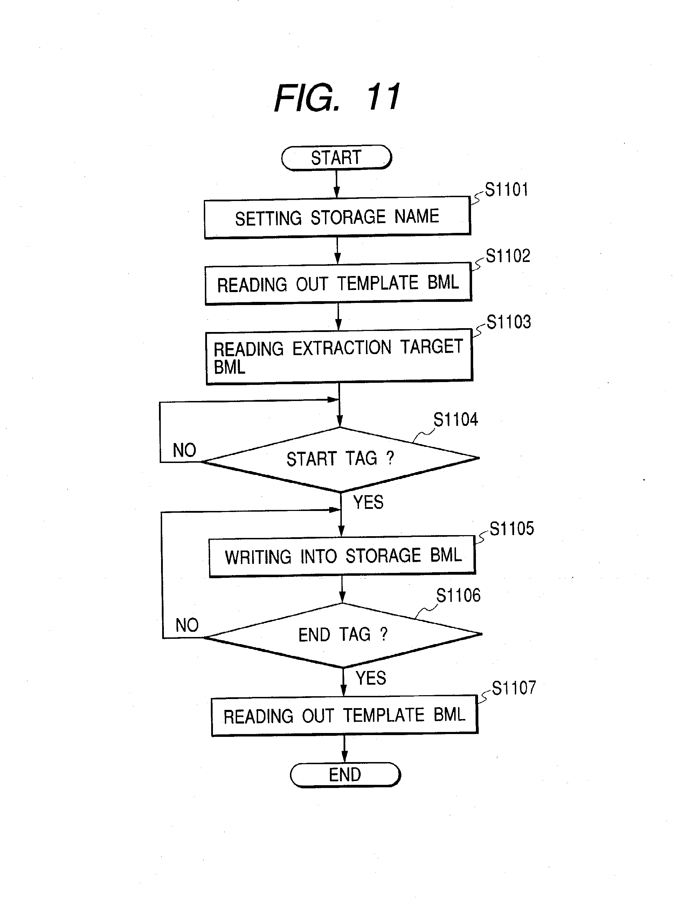

In the following, there will be explained a process of the storage data generation unit 203 with reference to a flow chart shown in Fig. 11. When an extraction element is decided by the operation of the decision key 605 of the remote controller R as explained in the foregoing, there is set a storage name for the storage BML document (step S1101). The setting of the storage name can be executed for example by a method utilizing information of a program including the extraction target BML document or a description of a title element of the extraction target BML document, or a method of displaying a setting image or a setting window and executing a setting operation by the remote controller. In case of a remote controller operation, since the extraction process unit 202 has disabled the key commands other than those of the decision key 605 and the direction keys 606, it is necessary to reset the enabled state of the key commands of the remote controller R according to the setting method.

Upon setting of the storage name of the storage BML document to be prepared, the storage template BML document 204a is read out from the memory 204, and a part thereof from a start tag of a bml element to a start tag of the div element (part 1000 shown in Fig. 10) is read out and then written into an internal memory as a storage BML document (step S1102). Then the extraction target BML document is read out from the data broadcast data (step S1103), and there is specified a description position of a start tag of the extraction element decided by the extraction process unit 202 (step S1104).

As the extraction element information to be used for specifying the start tag of the extraction element, there may be employed a value of an id attribute of the extraction element, two values of an element name and an id attribute of the extraction element, or an object having all the attributes of the extraction element, obtained from the DOM object 305. In an example shown in Fig. 8, based on such extraction element information and the DOM object 305, there is specified a start tag of a div element of which the id attribute is "div 0".

A part describing the start tag of the extraction element is retrieved by the extraction element information from the start of the extraction target BML document, and, when the describing position of the start tag of the extraction element is specified, there is initiated a writing into the storage BML document on the internal memory, utilizing the extraction target BML document and starting from the start tag of the extraction element (step S1105). Then, during the writing into the storage BML document, there is specified a describing position of an end tag of the extraction element (step S1106).

As the information to be used for specifying the end tag of the extraction element, there may be employed, for example, a value of an id attribute of a brother element described next to the extraction element, or a value of an id attribute indicating presence or absence of a child element of the extraction element or of a last one among the children elements (third one if there are three children elements), and these can be obtained from the extraction element and the DOM object 305.

When the describing portion of the end tag of the extraction element is specified in the course of writing into the storage BML document 4, the writing from the extraction target BML document is terminated upon wiring the end tag. A range of the extraction target BML document written into the storage BML document is a part 801 shown in Fig. 8.

Then utilizing the storage template BML document 204a, a range from the end tag of the div element to the end tag of the bml element (range 1002 in Fig. 10) is copied onto the storage BML document in the internal memory.

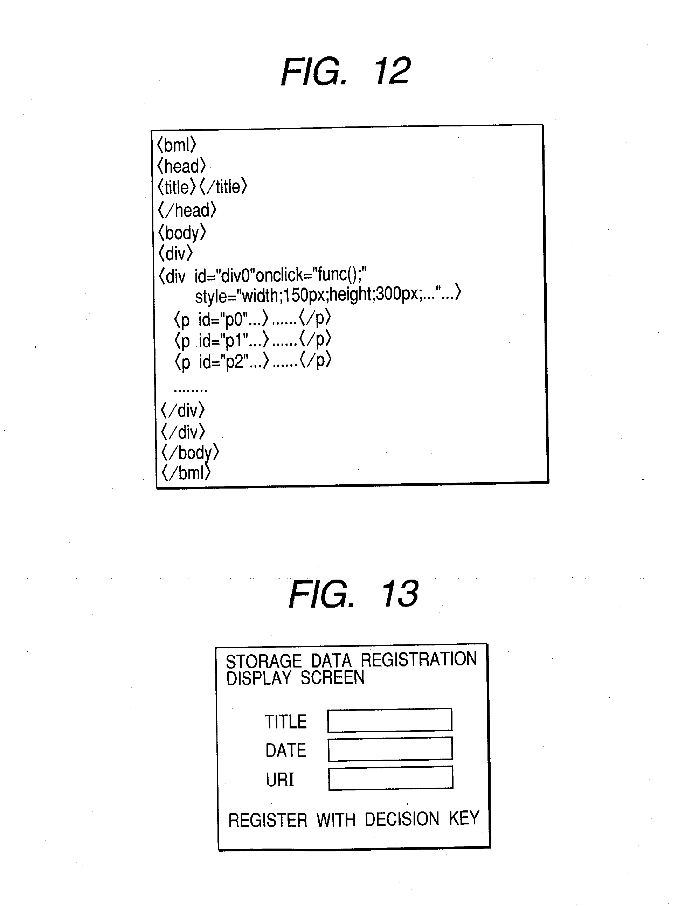

Upon completion of the storage BML document, the storage data generation unit 203 stores the data of the storage BML document in the storage unit 112 through the data bus 114. Fig. 12 shows a storage BML document prepared through the above-described procedure.

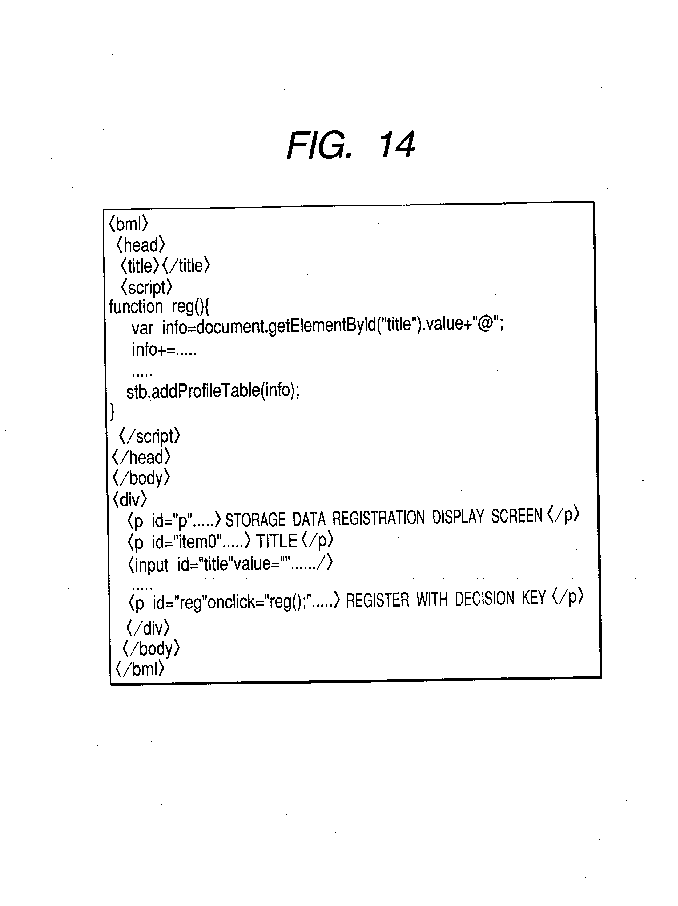

After the preparation of the storage BML document in this manner, the BML browser 201 reads out, from the memory 204, a registration BML document 204b employed in a registration of attribute information relating to such storage BML document, then generates display image data for registration and outputs such data to the display control circuit 107. Based on an instruction from the control circuit 111, the display control circuit 107 displays such registration display image on the display unit 108. Fig. 13 shows a state of the registration display image. Also Fig. 14 shows a state of the registration BML document data 204.

In an example shown in Figs. 13 and 14, as attribute information relating to the storage BML document, there are registered title information for specifying the storage BML document, a time and a date of broadcasting, and a URI (uniform resource indicator) information for specifying a storage location for storing the document. There can also be conceived a broadcast program name, a genre of the program etc., but there may be employed at least one arbitrary information always including the URI information of the storage BML document. The number, kinds and order of such registered information are uniquely determined by the description content of the registration BML document 204b.

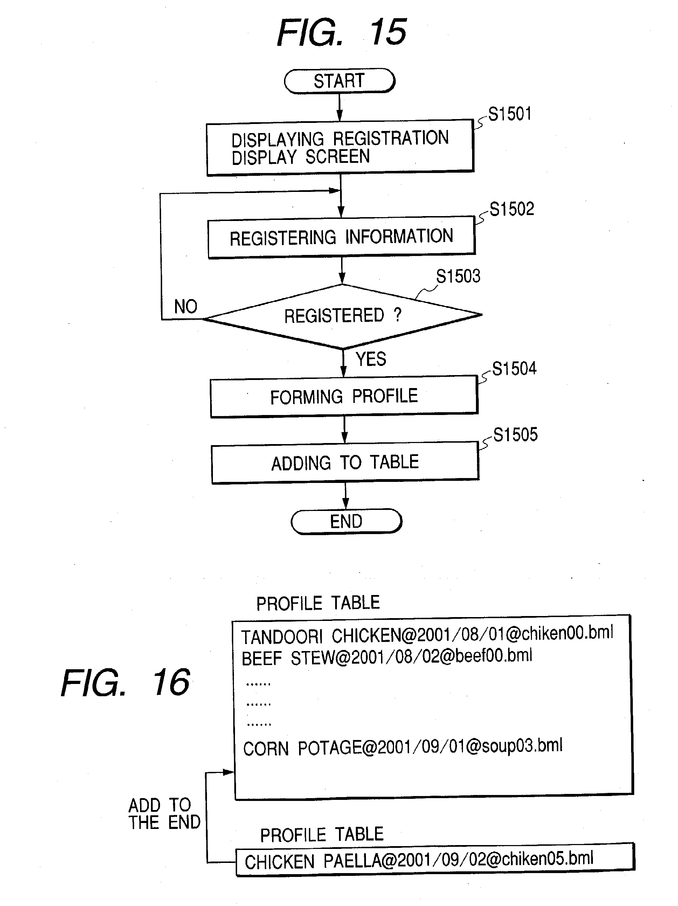

In the following there will be explained, with reference to a flow chart shown in Fig. 15, a process of attribute information registration and a profile table addition by the BML browser 201.

When a storage BML document is prepared, the BML browser 201 reads out a registration BML document 204b from the memory 204, then generates display image data for registration and displays such data on the display unit 108 through the display control circuit 107 (step S1501). Then the user enters the registration data by operating the remote controller R (step S1502). Upon completion of the data entry (step S1503), profile data are prepared based on the input data (step S1504).

The BML browser 201 generates the profile data by executing a script according to the description of the registration BML document 204b.

In Fig. 14, a script specified by "reg()" is executed to acquire as a variable 'info', a character train constituted by an addition of "@" at the end of a title, also acquiring a character train constituted by an addition of "@" at the end of information on the time and date of broadcast, for addition to the variable 'info', and acquiring the URI information for further addition to the variable 'info', and such variable 'info' is added as profile data to a profile table 204c (step S1505).

In the present embodiment, registration data are added to the profile table 204c, utilizing a script executing function for an addition to the profile table in the BML browser 201. In Fig. 14, the script executing function can be called, as "stb.addProfileData()", from the script, and the profile data is transferred as an argument. The script executing function for the profile table addition may also be called for example by "browser.addData()", and there is employed a calling method determined in advance in the BML browser 201.

Upon calling this function, the BML browser 201 accesses to the profile table 204c stored in the memory 204.

The profile table 204c is formed by an array of character trains constituting profile data, and the character trains are separated by a line feed. The script executing function for the profile table addition adds the profile data, transferred as an argument, to the end of the profile table after a line feed.

Fig. 16 shows an example of the profile table 204c generated by processing the registration BML document shown in Fig. 14.

In the profile table 204c, a character train of a line constitutes profile data, and a character train punctuated by a specified character ("@" in Fig. 16) in the profile data is registered information.

In the example shown in Fig. 16, among registration information punctuated by the character "@", the first one is title information, the second one is information on the time and date of broadcasting, and the third one is a URI information of the storage BML document. Thus, such profile data can be used to retrieve a specified character train on the title information of all the lines contained in the profile table 204c.

Also the script executing function held by the BML browser 201 contains a function for handling table data of a format such as the profile table 204c as an object (for example extraction of designated information from a designated line, or a conditional search), so that profile table 204c can be operated by a structured document handled by the BML browser 201.

The storage BML document can be displayed on the display unit 108 by reproduction from the storage unit 112 and by processing in the data broadcast processing circuit 109.

More specifically, in case an instruction for a reproduction of the stored data broadcast data is given by a reproduction key (not shown) of the remote controller R, the control circuit 111 reproduces the designated storage BML document from the storage unit 112 and outputs it to the data broadcast processing circuit 109. The BML browser 201 of the data broadcast processing circuit 109 processes the storage BML document data as explained in the foregoing to generate data for an image display and output such data to the display control circuit 107.

In the present embodiment, in reproducing plural storage BML document data stored in the storage unit 112, desired BML document data can be retrieved and reproduced, utilizing the profile data recorded together with the storage BML document data.

In the following there will be explained a retrieval process for the storage BML document data by the BML browser 201.

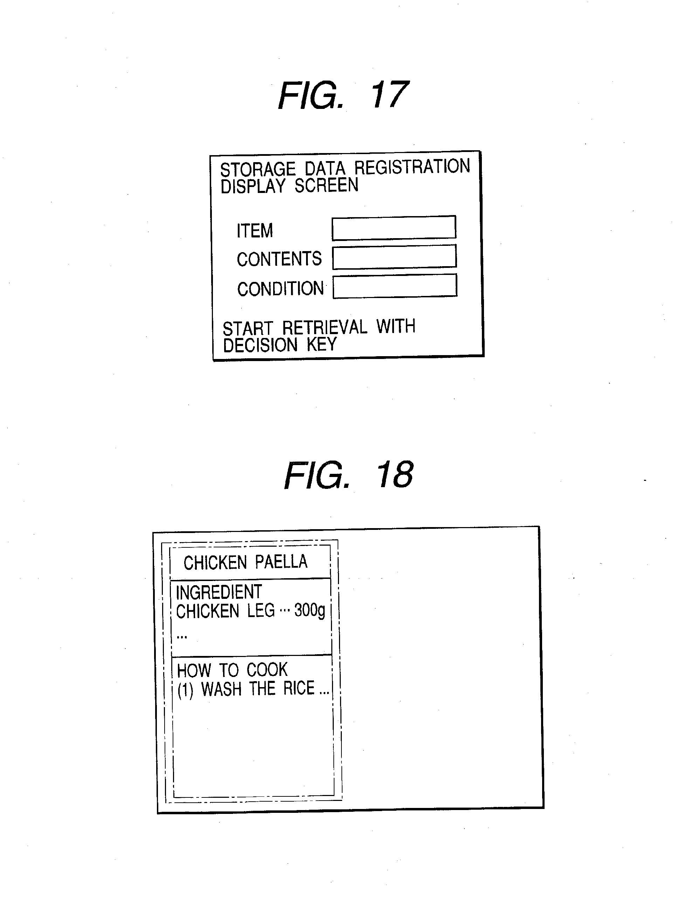

When a retrieval start key of the remote controller R is operated by the user, an operation control unit 307 of the BML browser 201 reads out a BML document 204d for retrieval, stored in the memory 204, generates display image data for retrieval and displays such data on the display unit 108 through the display control circuit 107. Fig. 17 shows a state of a retrieval display image. In case the user enters a retrieving condition by the remote controller R and operates the decision key 605 during the display of such retrieval image, the operation control unit 307 of the BML browser 201 retrieves the BML document data matching the designated condition, utilizing the profile table 204c stored in the memory 204.

More specifically, the operation control unit 307 calls, in a script executed according to the user instruction for retrieval, a retrieving condition acquiring a script executing function for a table data retrieval as an argument, thereby obtaining profile data matching the retrieving condition as a result of retrieval. The retrieving condition designated in this operation is, for example, information constituting a retrieval target in the information registered as the profile table 204c, a character train to be compared with the retrieval target, or a relation of the retrieval target and the character train (retrieval target including a character train, retrieval target starting with a character train etc.).

Such the condition is entered by an operation of the remote controller R by the user, but it may also be entered by a designation on a displayed character tablet or the like, or by a selection within predetermined selecting options. As the profile data obtained as the result of retrieval by the designated condition always includes URI information indicating the storage location of the storage BML document, the operation control unit 307 reads out the profile data corresponding to the result of retrieval from the profile table 204c of the memory 204 and transfers data, described in the profile data and indicating the storage location of the BML document, to the control circuit 111.

The control circuit 111 reproduces the BML document data from the designated storage location (for example storage unit 112), and outputs such data to the data broadcast processing circuit 109. The data broadcast processing circuit 109 processes the reproduced BML document data to generate display image data and displays such data on the display unit 108 through the display control unit 107. Fig. 18 shows a displayed image of thus reproduced BML document data.

In the present embodiment, as explained in the foregoing, each element in a BML document can be selected and stored as a BML document, so that an arbitrary portion only of the displayed image of the data broadcast can be stored as a BML document and it is no longer necessary to record the entire program.

Also the format of storage is not in image data but is a format of a structured document (BML document) same as in the data broadcast, whereby the amount of the stored data can be made smaller and -the limited capacity of the accumulating apparatus or the like can be effectively utilized.

Furthermore, registration image data for the profile data and a procedure thereof, retrieving image data and a procedure thereof are all processed in BML document data, so that a retrieving application need not be prepared separately.

In the present embodiment the profile table 204c is stored in a format shown in Fig. 16, but a storage in another format is also possible.

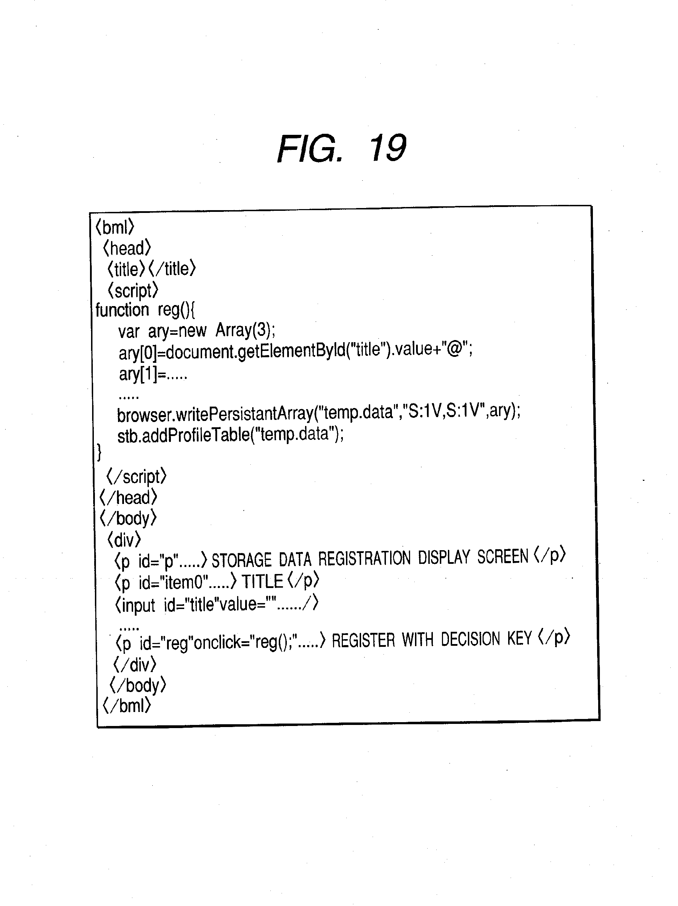

As an example, there will be explained a case of employing data shown in Fig. 19 as the registration BML document data 204b. Upon generation of the storage BML data as explained in the foregoing, the BML browser 201 reads out the registration BML data 204c from the memory 204, and displays a registration display on the display unit 108. When the user enters data of the items in this state, the BML browser 201 generates profile data.

The profile data are generated by executing a script.

More specifically, in the registration BML document 204c shown in Fig. 19, a script specified by "reg()" is executed to acquire title information as a first value of an array "ary", information on the time and date of broadcasting as a second value, and URI information as a third value, and, assuming that each element in the array "ary" is character train data of a variable length, the array "ary" is converted in data of a binary expression.

Then the BML browser 201 outputs such binary expressed data as a file to the memory 204, thereby adding such file as profile data to the profile table 204c in the memory 204.

The addition to the profile table 204c is executed by a script executing function for profile table addition, provided in the BML browser 201.

In the example shown in Fig. 19, the script executing function can be called, as "stb.addProfileData ()", from the script, and URI information constituting the profile data for specifying the file is transferred as an argument. The script executing function for the profile table addition may also be called for example by "browser.addData()", and there is employed a calling method determined in advance in the BML browser 201.

Upon calling this function, the BML browser 201 accesses to the profile table 204c stored in the memory 204.

The profile table 204c is formed by an array of binary format data constituting profile data. The script executing function for the profile table addition adds the profile data, transferred as an argument, to the end of the profile table after an addition of a file capacity of the binary format data, represented in a binary expression.

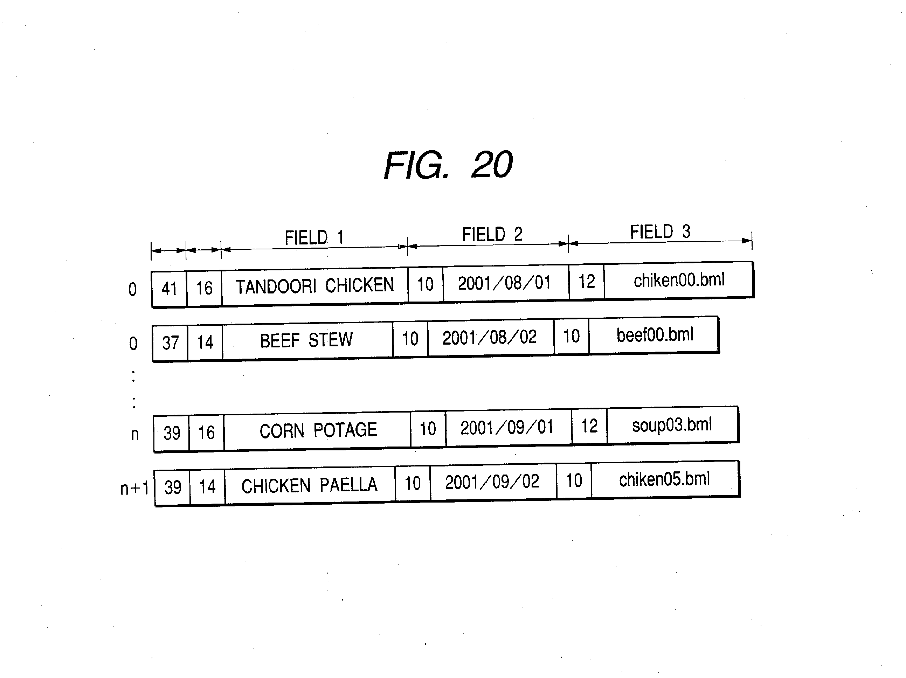

Fig. 20 shows an example of the profile table 204c generated by the registration BML document shown in Fig. 19.

The profile table 204 c are binary format data, constituted by plural profile data, and each profile data are stored in a specified format. In Fig. 20, there is at first designated the capacity of the profile data, which is followed by three fields of character trains of variable length, including a designation of a capacity of the character train.

In Fig. 20, in the (n+1)th profile data, a capacity of such profile data is designated in the first byte as 39 bytes in the illustrated example. A second byte indicates the capacity (14 bytes in this case) of title information constituting the first registration information, and 14 bytes from 3rd byte to 16th byte designate the title information. Then a 17th byte indicates the capacity (10 bytes in this case) of broadcast time/date information constituting the second registration information, and 10 bytes from 18th byte to 27th byte designate the broadcast time/date information. Also a 28th byte indicates the capacity (12 bytes in this case) of URI information constituting the third registration information, and 12 bytes from 29th byte to 40th byte designate the URI information.

After the profile table is generated in this manner, it is possible execute a retrieval process utilizing such profile data as explained in the foregoing.

### Second embodiment

In the first embodiment, in case of a user instruction for retrieving a stored BML document, a retrieval process is automatically executed with the stored profile table and data of a BML document is displayed according to the result of the retrieval.

In a second embodiment to be explained in the following, in case plural BML documents matching the retrieving condition are detected, such BML documents are displayed as a list and a BML document designated by the user among the listed BML documents is reproduced.

In the present embodiment, the configuration of the television receiver and the basic process thereof are similar to those in the first embodiment, and the process for generating the storage BML document and the process for generating the profile table are also similar to those in the first embodiment.

More specifically, also in the present embodiment, a BML document which is the currently displayed data of the data broadcast is selected as the extraction target BML document. In case the extraction start key provided in the remote controller R is operated during the display of the extraction target BML document, an extraction process is initiated, and, when an extraction element in the extraction target BML document is decided, the storage data generation unit 203 prepares a storage BML document based on such extraction element. After the preparation of the storage BML document, a display image for registration is displayed based on the registration BML document 204b, and profile data are prepared by registering information on the storage BML document through the remote controller R. These processes of extraction, preparation of the storage document and preparation of the profile data are similar to those in the first embodiment.

In case of retrieving thus prepared storage BML document, the retrieval is executed also in the present embodiment with the retrieval BML document 204d and the profile table 204c.

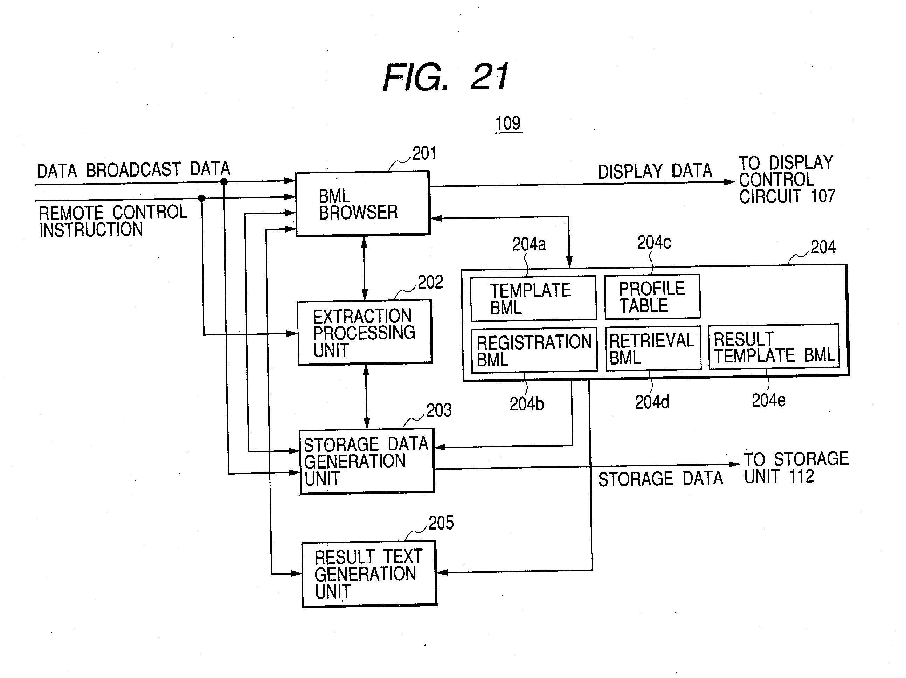

Fig. 21 is a view showing the configuration of a data broadcast processing circuit 109 in the present embodiment, wherein components equivalent to those in Fig. 2 are represented by same numbers.

In case a start of a retrieval is instructed by the user, the BML browser 201 reads out the retrieval BML document 204d from the memory 204, generates the display image data for retrieval and displays such data on the display unit 108. As the user designates a desired retrieving condition by the remote controller R and operates the decision key during the display of the retrieval image, there is executed a retrieval utilizing the profile table 204c.

More specifically, in a script executed in response to the retrieval instruction, the retrieval condition which has acquired the script executing function for the table data retrieval is called as an argument, whereby profile data matching the retrieval condition are retrieved. The script executed in response to the operation of the decision key, upon obtaining a result of the retrieval, transfers such result of retrieval to a result document generation unit 205 shown in Fig. 21. In this operation, a script executing function provided in the BML browser 201 for transferring the retrieval result is used to transfer the result of the retrieval to the result document generation unit 205.

This script executing function can be called, for example by "stb.sendResultArray()", from the script, and the retrieval result is transferred as an argument. This script executing function may also be called for example by "browser.sendResult()", and there is employed a calling method determined in advance in structured document interpreting means 31.

Upon calling this function, the BML browser 201 transfers the retrieval result to the result document generation unit 205 and instructs to start a generation process for a result BML document. In response to the instruction for starting the generation of the result BML document, the result document generation unit 205 reads out a result template BML document 204e from the memory 204 and prepares a result BML document utilizing the retrieval result and the result template BML document 204e.

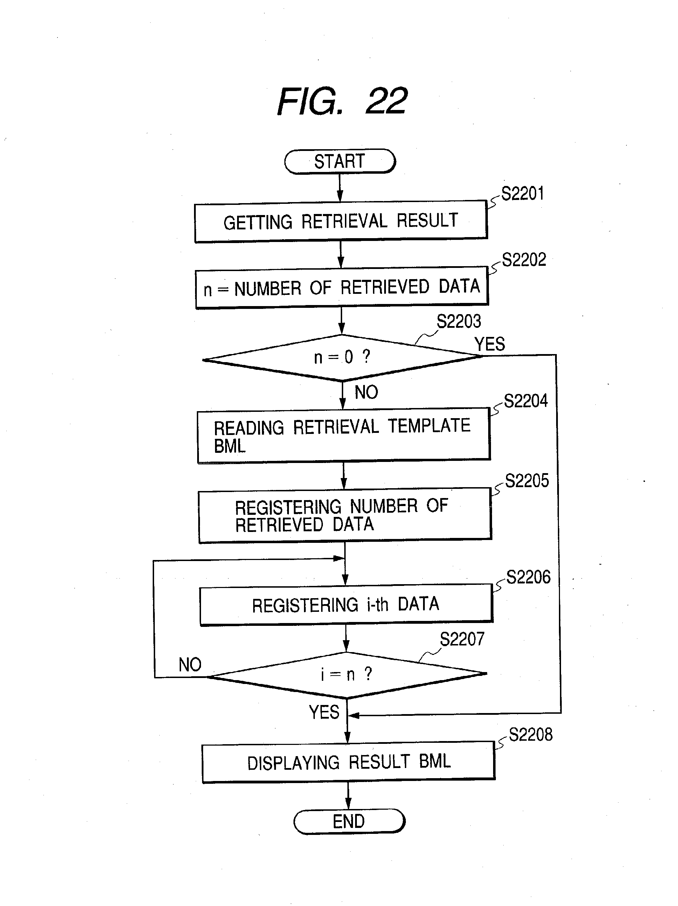

In the following there will be explained a process of the result document generation unit 205 with reference to a flow chart shown in Fig. 22.

Upon receiving the retrieval result from the BML browser 201 (step S2201), there is set a number n of the profile data contained in the retrieval result (step S2202). Since the retrieval result is array information constituted by, as the elements thereof, individual profile data extracted from the profile table 204c based on the retrieving condition, the number of the profile data contained in the retrieval result and indicating the number of matches is equal to the number of elements in the array information.

Then, there is discriminated whether the profile data matching the retrieving condition are present (step S2203), and, in case of 0 match where the profile data matching the retrieving condition do not exist, the result template BML document is outputted, without any change, to the BML browser 201 (step S2208). The result template BML document 204e is a structured document, which is assumed to be equal to a result BML document in case there are no profile data obtained as the retrieval result.

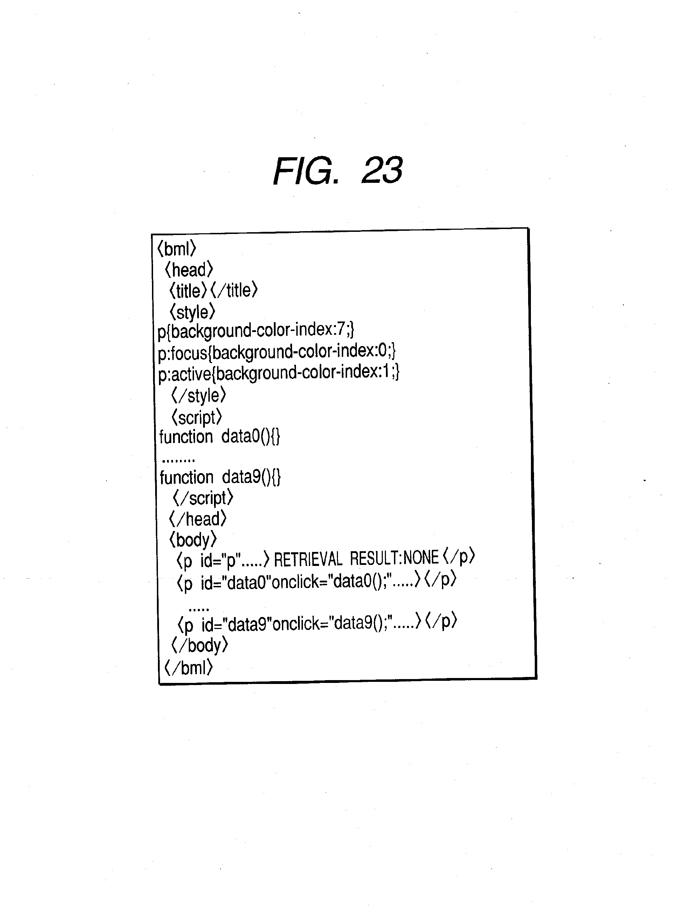

Fig. 23 shows an example of the result template BML document 204e. In the example shown in Fig. 23, the storage BML document constituting the profile data obtained as the retrieval result can be registered up to ten units, so that there are provided 10 scripts from "data0()" to "data9()", and 10 p elements, which are display elements, with the id attribute from "data0" to "data9". A p element with the id attribute "data0", in case the decision key 605 of the remote controller R is operated in a focused state, calls a script specified by "data0()". In an initial state, the called script of "data0()" has no description and does not cause any action. Also the text of the p element is empty. This text may however be a character train such as "undefined".

In the result template BML document 204e shown in Fig. 23, the style attribute has a designation of a background color of the p element, which designates a black background in case the p element is focused, a white background in case the p element is unfocused and a red background in an active state.

In case the step S2203 identifies that the number of matches is not 0, the result template BML document 204e is read out from the memory 204 (step S2204), and the number of matches is updated (step S2205). In the example shown in Fig. 23, for a number n = 5 of the matches, the test description of the p element having an id attribute "p" is updated from "retrieval result: 0" to "retrieval result: 5".

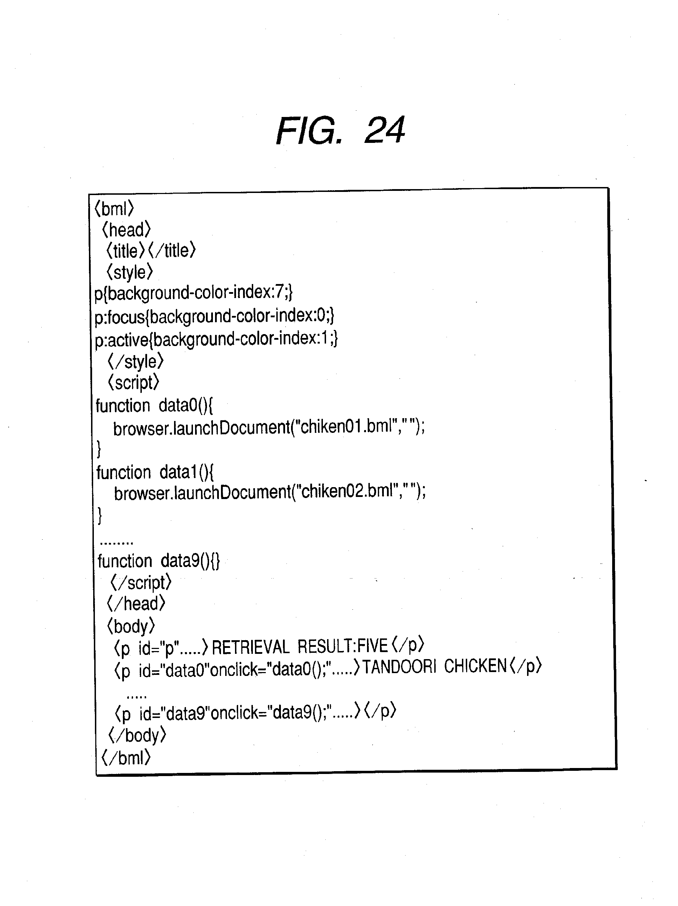

Then a registration is executed based on first profile data (step S2206). Since the retrieval result is array information containing the profile data as elements corresponding to the number of matches, at least one of the registered information is taken out from the profile data constituting the first element and is used to update the first display element of the result template BML document 204e and the description of the script. In the example shown in Fig. 23, the text description of the p element having the id attribute "data0" is updated from "empty" to the registered title information, and the description of the script called by the p element is updated from "empty" to the registered URI information. Similarly the result template BML document 204e is updated for the profile data of the second match to the last match. After the update for the number of matches (step S2207), the updated result template BML document 204e is outputted as a result BML document to the BML browser 201. Fig. 24 shows an example of the result BML document.

The BML browser 201 processes such result BML document to generate a list display image data, and display a list of the retrieval results on the display unit 108 through the display control unit 107.

A list image of the retrieval results is displayed in succession to the execution of the retrieval by the operation of the retrieval start key of the remote controller R. As regards the result template BML document 204e referred to by the result document generation unit 205, it is also possible, in addition to the example shown in Fig. 23, to utilize an element for profile data registration as the a element, and to execute a designation for document transition to the storage BML document corresponding to the profile data by a href attribute. It is also possible, instead of preparing the result BML document shown in Fig. 24, to display a updated result template BML document 204e as a DOM object.

After the list image is displayed, the user designates desired BML document data and instructs the reproduction by the remote controller R. In response to the instruction for reproduction, the control circuit 111 receives the storage location data and the title information of the designated BML document data from the data broadcast processing circuit 109, then reproduces the designated BML document data from the storage location, for example from the storage unit 112, and outputs such data to the data broadcast processing circuit 109. The data broadcast processing circuit 109 processes the reproduced BML document data to generate display image data and displays such data on the display unit 108.

The present embodiment, as explained in the foregoing, displays a list of the retrieval results of the stored BML document data, so that, even in case plural BML document data are stored, the user can designate and reproduce the desired BML document from such BML document data.

Also a result document for displaying a list of the retrieval result is also formed as a BML document so that a new configuration is not required for displaying the result.

### Third embodiment

In the following there will be explained a third embodiment of the present invention.

In the second embodiment, at the preparation of the storage BML document data, the profile data are recorded in the profile table, and, at the reproduction, a BML document showing a list of the retrieval result employing such profile table is prepared and displayed.

In the present embodiment, at the generation of the storage BML document data, there are prepared BML document data for a list display of the stored BML document data, and the user at the reproduction arbitrarily designates and reproduces the BML document from such list display.

In the present embodiment, the configuration of the television receiver and the basic process thereof are similar to those shown in Fig. 1, and the basic receiving operation is also similar.

In the following there will be explained a generation process for the storage BML document data and a process for list BML data in the present embodiment. Fig. 21 is a view showing the configuration of a data broadcast processing circuit 109 in the present embodiment, wherein components equivalent to those in Fig. 2 or 21 are represented by same numbers. The present embodiment also employs a configuration as in the foregoing embodiment of extracting an area designated by the user from a displayed data broadcast image by the extraction process unit 202, and storage BML data are generated from the result of extraction and the storage template BML document.

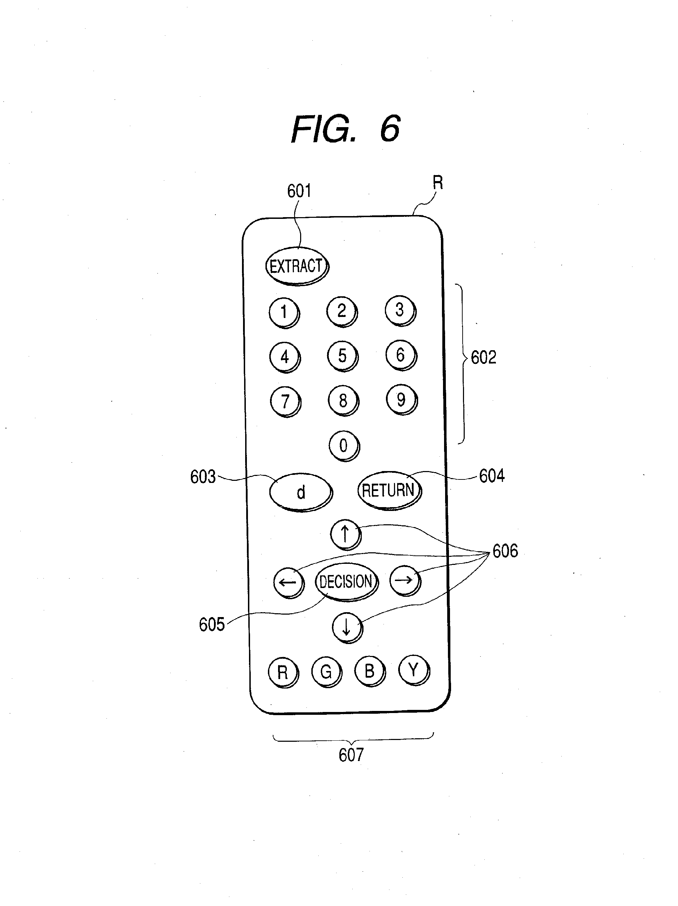

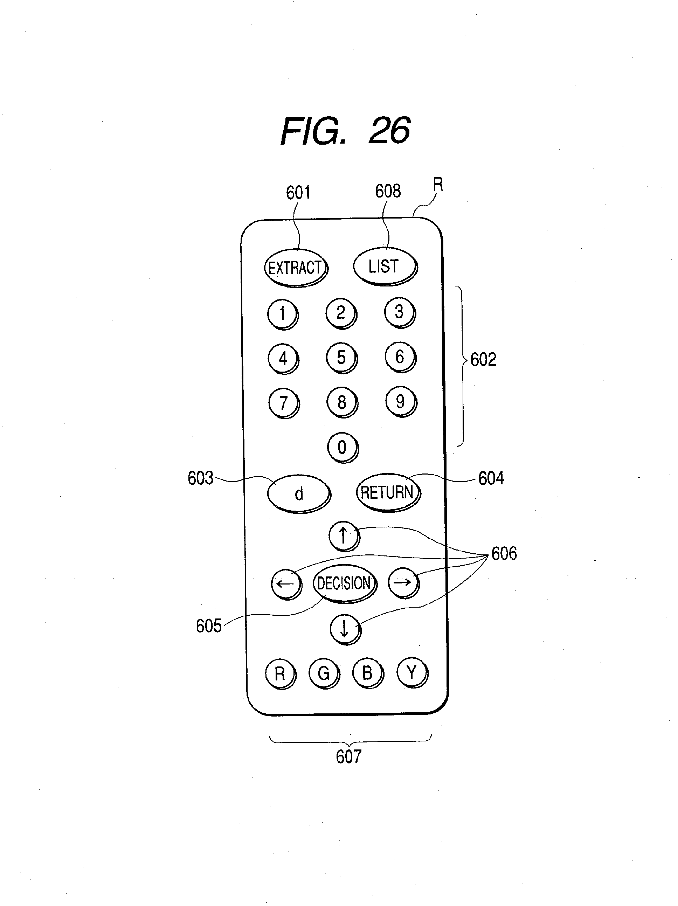

Fig. 26 shows the configuration of a remote controller R employed in the present embodiment, which additionally has a list display key 608, in comparison with the remote controller R shown in Fig. 6.

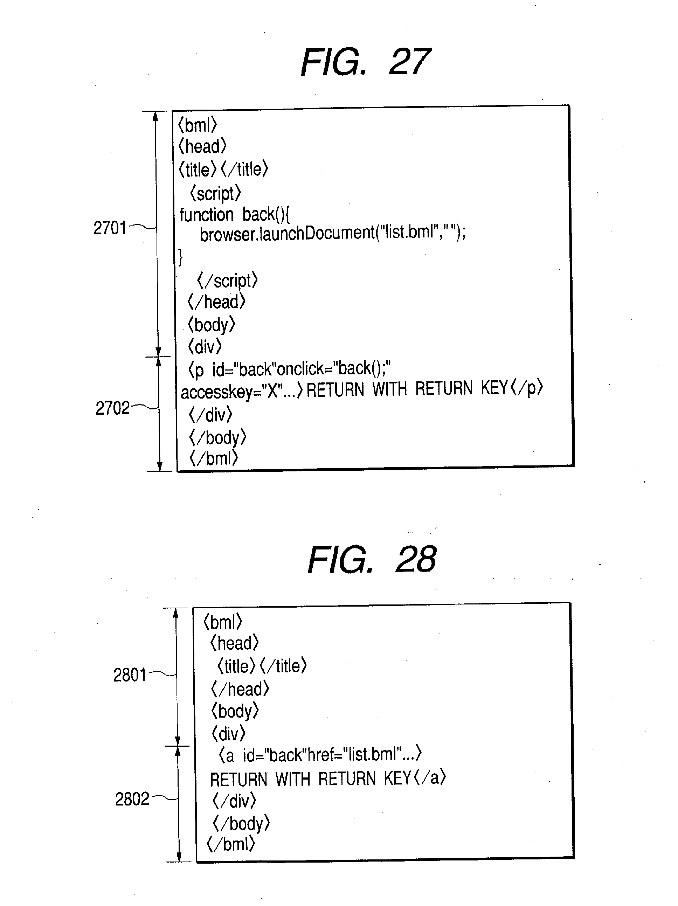

Fig. 27 shows a state of the storage template BML document 204a employed in the present embodiment. The template BML document 204a shown in Fig. 27 includes a p element for transition to the list BML document by calling a script described in the script element in response to an operation of the return key 604 of the remote controller R. In this manner, the BML document shown in Fig. 27 allows setting of any displayable element and is capable of transition to the list BML document by the return key 604, and such document is used as the storage template BML document 204a.

Also an object element referring to the image (corresponding to a text) may be employed instead of the p element. Also Fig. 28 shows an example of the storage template BML document 204a employing an a element instead of the script element and the p element for transition to the list BML document. A div element described in the storage template BML document 204a has style information for designating the entire area capable of image display.

The generation process for the storage BML document data by the storage data generation unit 203 is similar to that in the foregoing embodiment. More specifically, when an extraction area is decided by the extraction process unit 202, the storage data generation unit 203 generates the storage BML document data according to the flow chart shown in Fig. 11. In the present embodiment, however, there is employed a template BML document shown in Fig. 27. Thus, the step S1103 in Fig. 11 reads a BML document corresponding to a portion 2701 in Fig. 27, and the step S1107 reads a portion 2702 in Fig. 27.

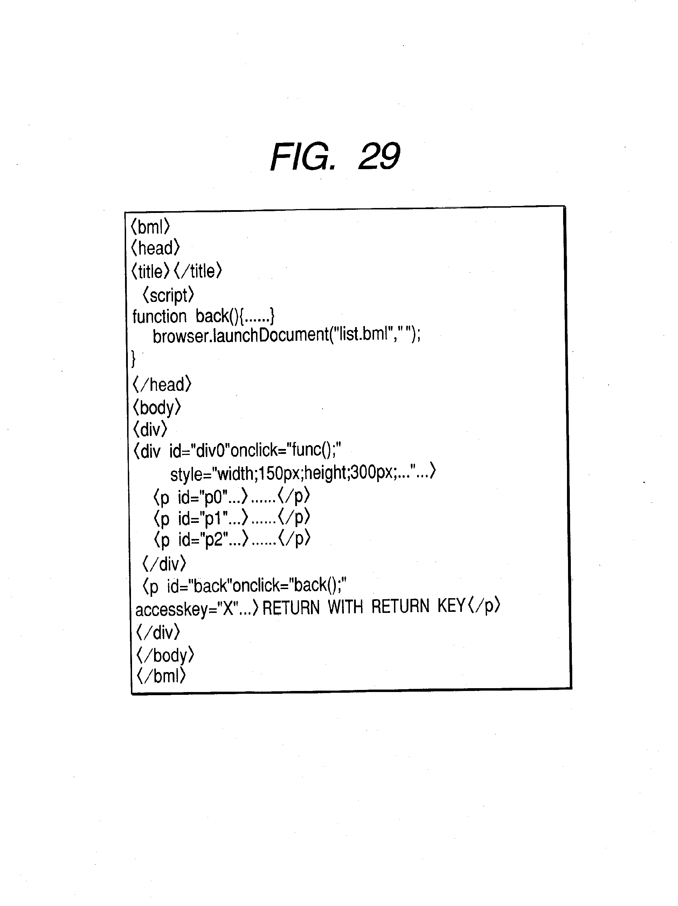

Fig. 29 shows a state of the storage BML document data thus generated.

In the following there will be explained a process for the list BML document associated with the generation of the storage BML document data.

A list document generation unit 206 generates a list BML document 204f, in which a storage name of the generated storage BML document is registered.

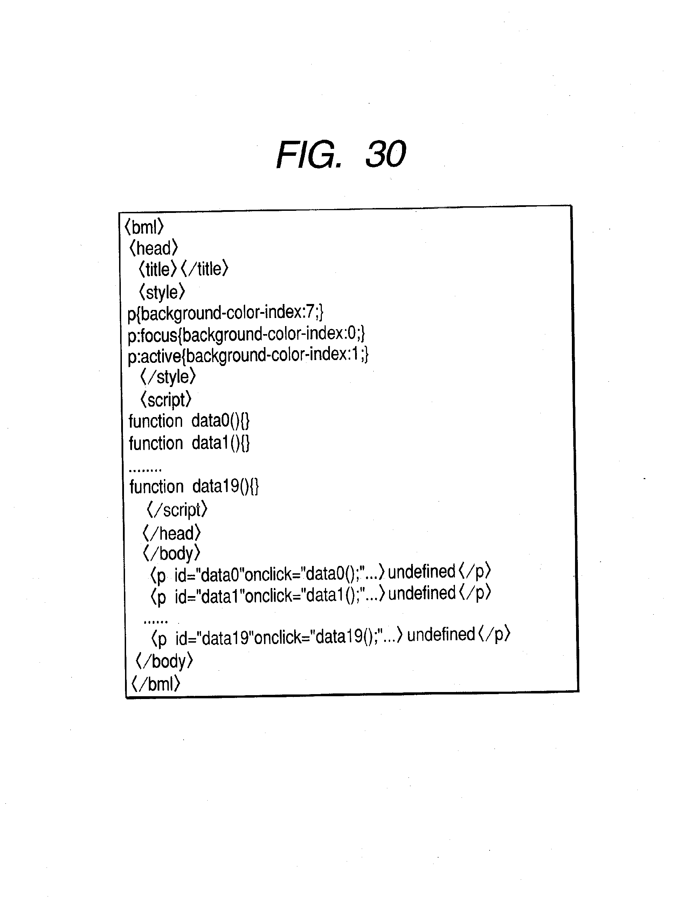

Fig. 30 shows an example of the list BML document in which no storage BML document is registered, namely the list BML document 204f in an initial state. In the example shown in Fig. 30, the storage BML document can be registered up to twenty units, so that there are provided 20 scripts from "data0()" to "data19()", and 20 p elements, which are display elements, with the id attribute from "data0" to "data19".

A p element with the id attribute "data0", in case the decision key 605 of the remote controller-R is operated in a focused state, calls a script specified by "data0()". In an initial state, the called script of "data0()" has no description and does not cause any action. Also the text of the p element is "undefined". This text may also be empty or a character train such as "unregistered".

In the list template BML document 204f shown in Fig. 30, the style attribute has a designation of a background color of the p element, which designates a black background in case the p element is focused, a white background in case the p element is unfocused and a red background in an active state.

Upon generation of a storage BML document, the list document generation unit 206 registers a storage name of this document in the list BML document 204f. At first an empty display element and/or script is specified in the list BML document 204f, and the text of the display element (p element of the id attribute "data0") is rewritten to a storage name (xxx.bml), and a script (specified by "data0()") is described so as to realize a document transition to such storage BML document.

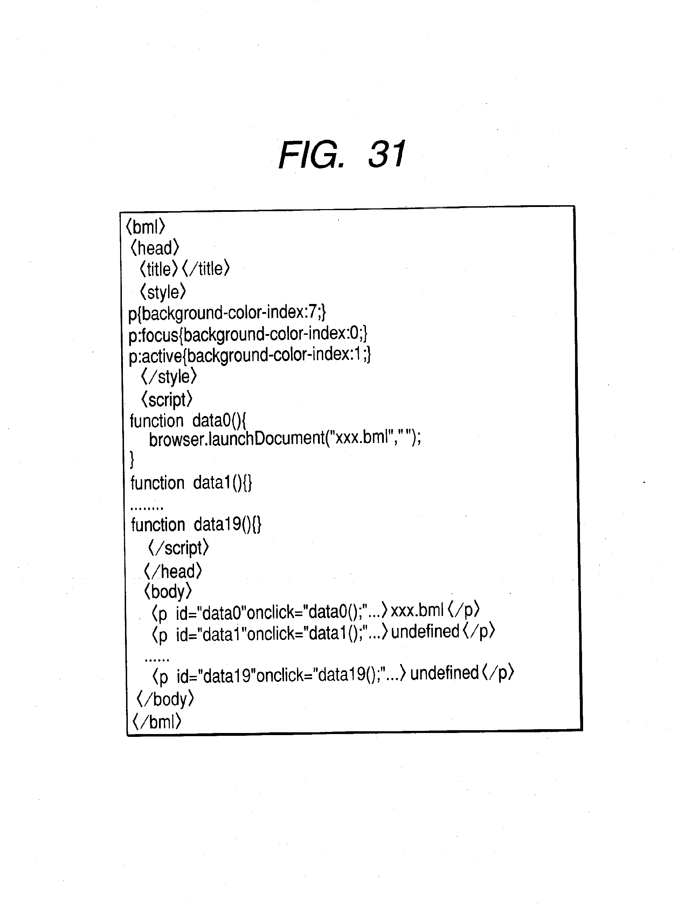

Fig. 31 shows an example of the list BML document 204f in which a storage BML document is registered. The text of the p element constituting the display element can also be, instead of the storage name (xxx.bml), a character train acquired from a program information such as EPG, a character train described in the title element, or a character train entered by an operation of the remote controller from another image or another window.

As explained in the foregoing, the list document generation unit 206 updates the content of the list BML document data 204f in the memory 204, for every generation of the storage BML document data.

In the following there will be explained a reproduction process for the storage BML document data utilizing thus generated list BML document data 204f.

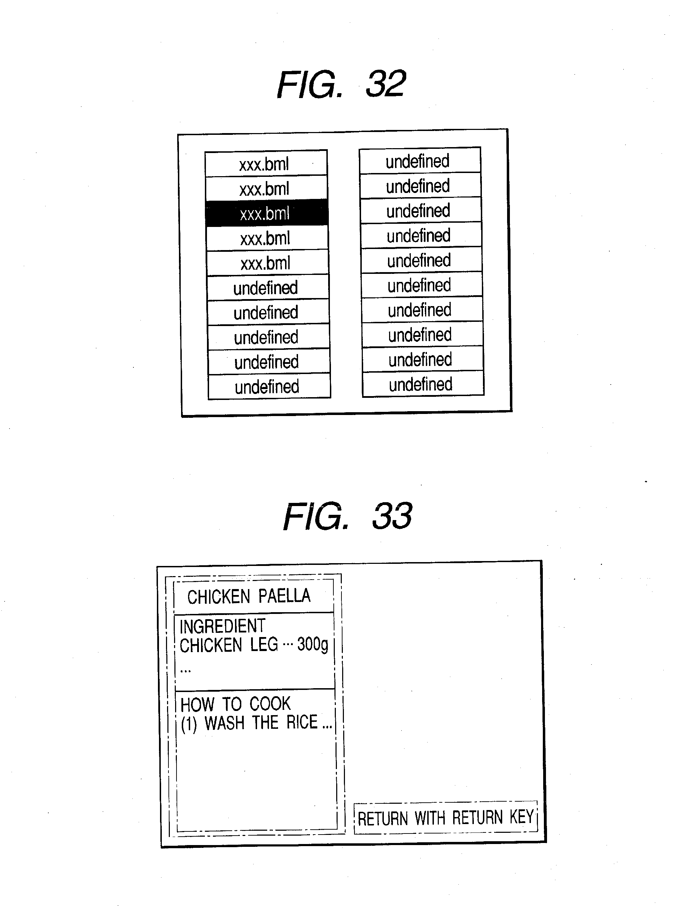

When the list key 608 of the remote controller R is operated, the control circuit 111 sends an instruction for a list display to the data broadcast processing circuit 109. In response to such instruction, the BML browser 201 of the data broadcast processing circuit 109 reads the list BML document 204f from the memory 204 and processes such document thereby generating list display image data. Also the control circuit 111 controls the display control circuit 107 to display such list display image on the display unit 108. Fig. 32 shows an example of the list image.

In case the user selects a desired storage BML document by the arrow keys 606 of the remote controller R and operates the decision key 605 while the list image is displayed as shown in Fig. 32, the BML browser 201 sends an instruction to the control circuit 111 so as to reproduce the designated storage BML document according to the description of the list BML document 204f. The control circuit 111 reproduces the BML document data from the designated storage location (for example storage unit 112), and outputs such data to the data broadcast processing circuit 109. The BML browser 201 processes the BML document data to generate display image data. Also the control circuit 111 controls the display control circuit 107 and displays the image of the reproduced BML document data on the display unit 108. Fig. 33 shows an example of the displayed image.

Also in case the user operates the return key 604 or the decision key 605 of the remote controller R while the BML document is displayed as shown in Fig. 33, the BML browser 201 again generates list display image data by the list BML document 204f. The control circuit 111 controls the display control circuit 107 to display such list display image on the display unit 108.

In the present embodiment, as explained in the foregoing, with a generation of the storage BML document, there are generated list BML document data for a list display of the stored BML document data, and arbitrary BML document data can be reproduced and displayed utilizing such list display image.

The format of storage of the list display BML document data is not a still image but is made a structured document same as in the data broadcast, whereby the amount of the stored data can be made smaller and the limited capacity of the accumulating apparatus or the like can be effectively utilized. Also the display of the stored data can be made through a list image, by an operation similar to that in the data broadcast. Also there is not separately required an application for the extraction process or an application for displaying the stored data, and the configuration of the digital broadcast receiving apparatus can be made smaller in comparison with a case of having such applications.

The list BML document shown in Fig. 30 employs p elements, but it is also possible to employ a elements only as the elements for registration.

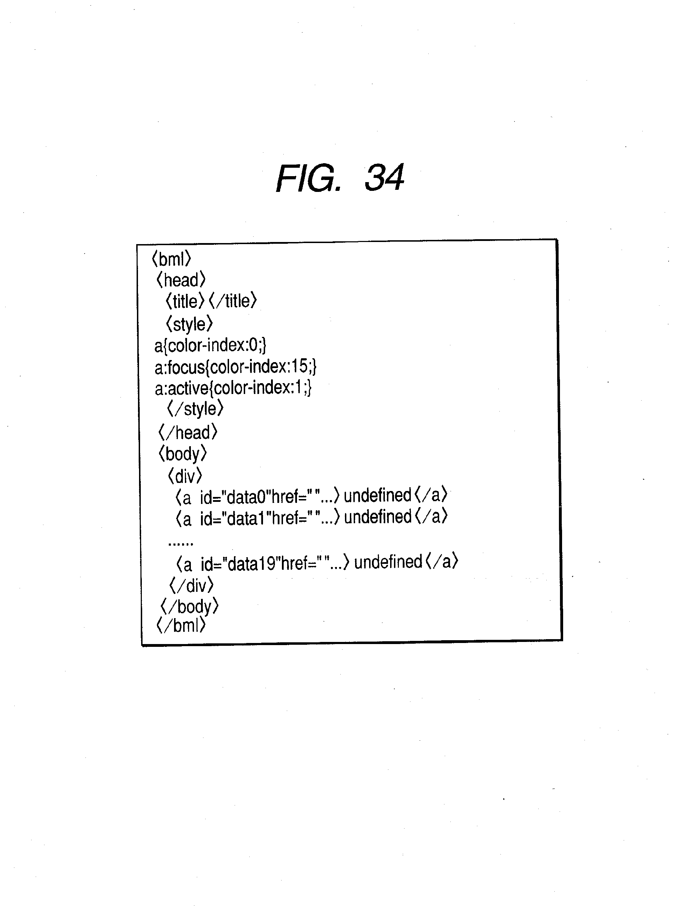

Fig. 34 shows an example of the list BML document 204f in a state in which no storage BML document described by the a elements only is registered. In the example shown in Fig. 30, the storage BML document can be registered up to twenty units, so that there are provided 20 p elements, which are display elements, with the id attribute from "data0" to "data19".

An a element with the id attribute "data0", in case the decision key 605 of the remote controller R is operated in a focused state, tries to cause a transition to the storage BML document specified by the href attribute. In an initial state, the href attribute has no description and does not cause any action. Also the text of the a element is "undefined". This text may also be empty or a character train such as "unregistered". In the list template BML document shown in Fig. 34, the style attribute has a designation of a character color of the a element, which designates a gray character color ((black + white)/3 × 2 in case the a element is focused, a black color in case the a element is unfocused and a red color in an active state.

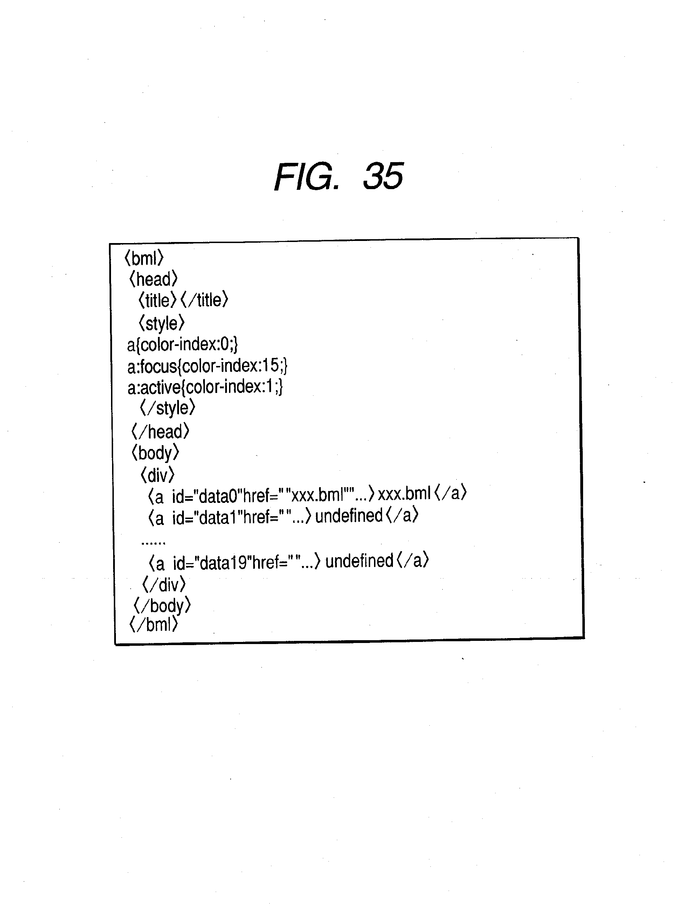

In case of utilizing such list BML document 204f, the list document generation unit 206 at first specifies an empty display element in the list BML document 204f, and the text of the display element (a element of the id attribute "data0") and the value of the href attribute are rewritten to a storage name (xxx.bml). Fig. 35 shows an example of the list BML document 204f in which a storage BML document is registered. The text of the a element constituting the display element can also be, instead of the storage name (xxx.bml), a character train acquired from a program information such as EPG, a character train described in the title element, or a character train entered by an operation of the remote controller from another image or another window.

The reproduction process utilizing thus generated list BML document data is similar to the reproduction process utilizing the aforementioned list display BML document shown in Fig. 30.

In the registration of a storage BML document in the list display BML document as explained in the foregoing, an empty display element may not be present because the registration number of the storage BML documents in the list BML document is not infinite (for example 20 in the examples shown in Figs. 30 and 34).

In the following, there will therefore be explained a configuration in which the list display BML document is constituted by plural documents, thereby enabling a list display of the storage BML documents of a number exceeding the registration number defined in a single list display BML document.

In such case, the list document generation unit 206 specifies an empty display element and/or script in the list BML document 204f shown in Fig. 30 or 34, rewrites the text of the display element (p element or a element of the id attribute "data0") to a storage name (xxx.bml), and describes a script (specified by "data0()") or a href attribute so as to realize a document transition to such storage BML document.

In this operation, in case an empty display element is not available for registering the prepared storage BML document, the list document generation unit 206 newly prepares a list BML document of an initial state and executes the registration process.

Such list BML document of the initial state is provided, in addition to the display element (p element or a element) and the script (only in case of the p element) for registration, with two elements and two scripts for transition to another list BML document by a remote controller operation.

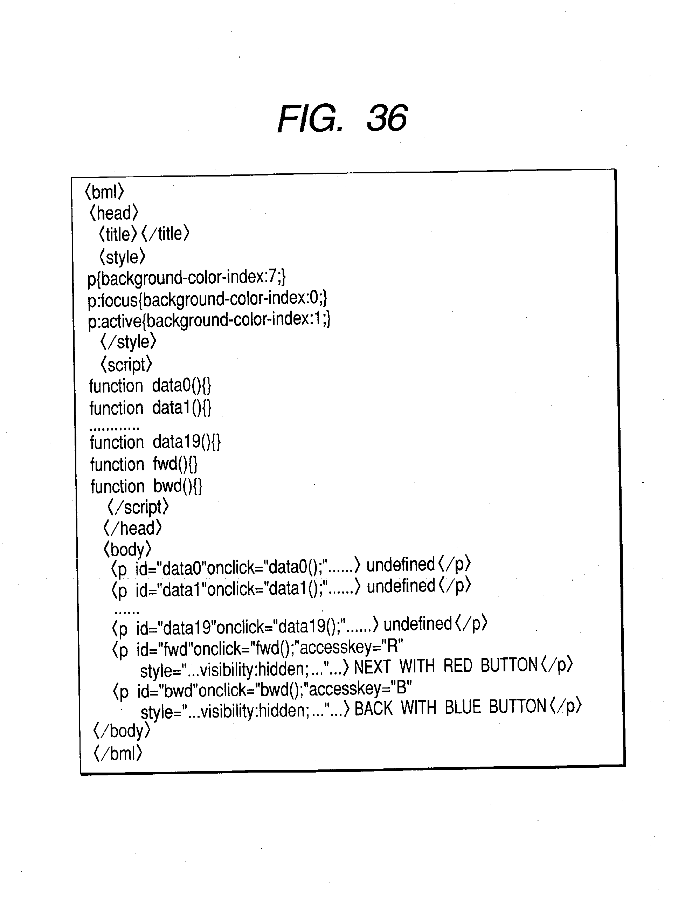

Fig. 36 shows an example of the list BML document 204f of the initial state in case the display element for registration is p element. In Fig. 36, a p element with an id attribute "fwd" calls a script specified by "fwd()" in response to an operation of a blue key of the remote controller R, and a p element with an id attribute "bwd" calls a script specified by "bwd()" in response to an operation of a red key of the remote controller R.

In the initial state, since these p elements have a visibility property "hidden", the texts of these p elements are not displayed on the image screen. Also the scripts "fwd()" and "bwd()" have empty descriptions, an operation of the red key or the blue key of the remote controller R causes no action. In the foregoing there has been explained a transition between the plural list BML documents using the red key and the blue key of the remote controller R, but it is also possible to describe the list BML document in such a manner that a transition is achieved by a green key or a return key, or by a focusing with the arrow keys followed by a decision with the decision key.

When all the elements for registration (p elements or a elements) of the first list BML document 204f are registered, the list document generation unit 206 rewrites the visibility property of the p element having an id attribute "fwd" to "visible", and describes the content of a script specified by "fwd()" so as to cause a transition to a newly prepared second list BML document 204f.

In the registration of a first storage BML document in the second list BML document, the visibility property of the p element with id attribute "bwd" is rewritten to "visible", and the content of the script specified by "bwd()" is described so as to cause a transition to the first list BML document 204f.

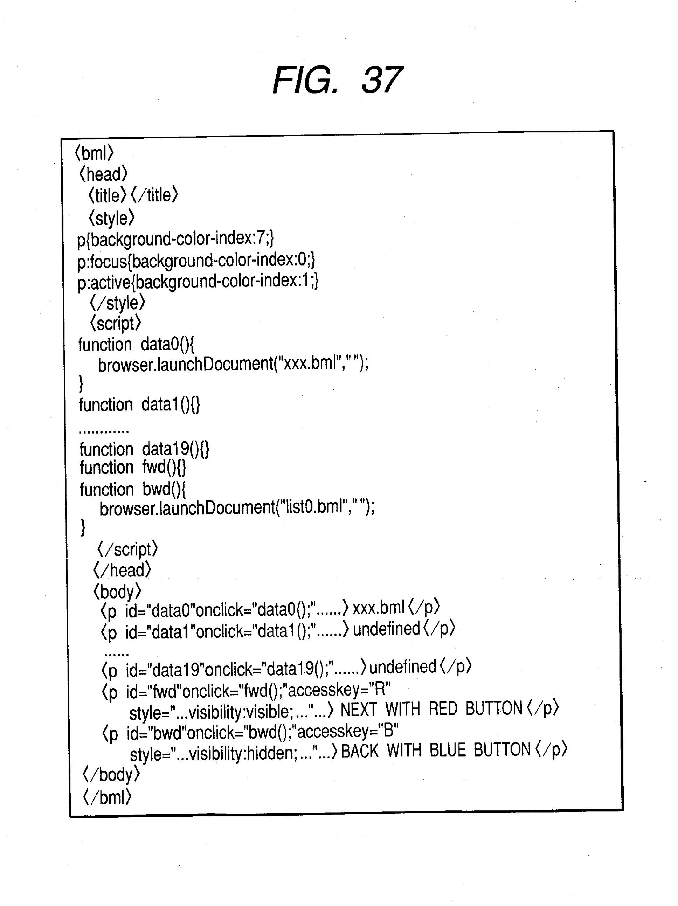

Fig. 37 shows an example of the second list BML document 204f in which a storage BML document is registered. Similarly, in case of generating three or more list BML documents, at the registration of a first storage BML document in an n-th list BML document, an element and a script for a transition to the (n-1)th list BML document are rewritten, and, at the registration of a 20th (maximum registerable number) storage BML document in the n-th list BML document, an element and a script for a transition to an (n+1)th list BML document are rewritten.

In case of reproducing a storage BML document utilizing thus generated list BML documents, the BML browser 201 at first reads out the first list BML document 204f from the memory 204 and generates a list display image data. The display control circuit 107 displays such list image on the display unit 108.

In case the red key of the remote controller R is operated during the list display by the first list BML document, the BML browser 201 reads out the second list BML document 204f from the memory 204 and generates a list display image data. The display control circuit 107 displays such list image on the display unit 108.

The user, after switching to a list display including a desired storage BML document by operating the red key or the blue key of the remote controller R, selects the desired storage BML document with the arrow keys 606 of the remote controller R and operates the decision key 605, whereupon the BML browser 201 so designates the control circuit 111 as to reproduce the designated BML document data, and the control circuit 111 reads out the designated BML document data from the storage location thereof and outputs such data to the data broadcast processing circuit 109.

The data broadcast processing circuit 109 generates display image data from the reproduced storage BML document data, and displays such data on the display unit 108 through the display control unit 107. Also, in case the return key 604 or the decision key 605 of the remote controller R is operated during the display of the storage BML document, there is executed a transition to a display image by the original list BML document 204f.

As explained in the foregoing, a list display can be realized regardless of the number of the storage BML documents, by managing the reproducing process for the storage BML document data utilizing a plurality of the list BML documents.

### Fourth embodiment

In the following there will be explained a fourth embodiment of the present invention. Also in the present embodiment, the configuration of the television receiver is similar to that shown in Fig. 1, and the basic receiving operation is also similar.

In the present embodiment, the data broadcast processing circuit 109 has a somewhat different configuration. In the following there will be explained a generation process for the storage BML document by the data broadcast processing circuit 109.

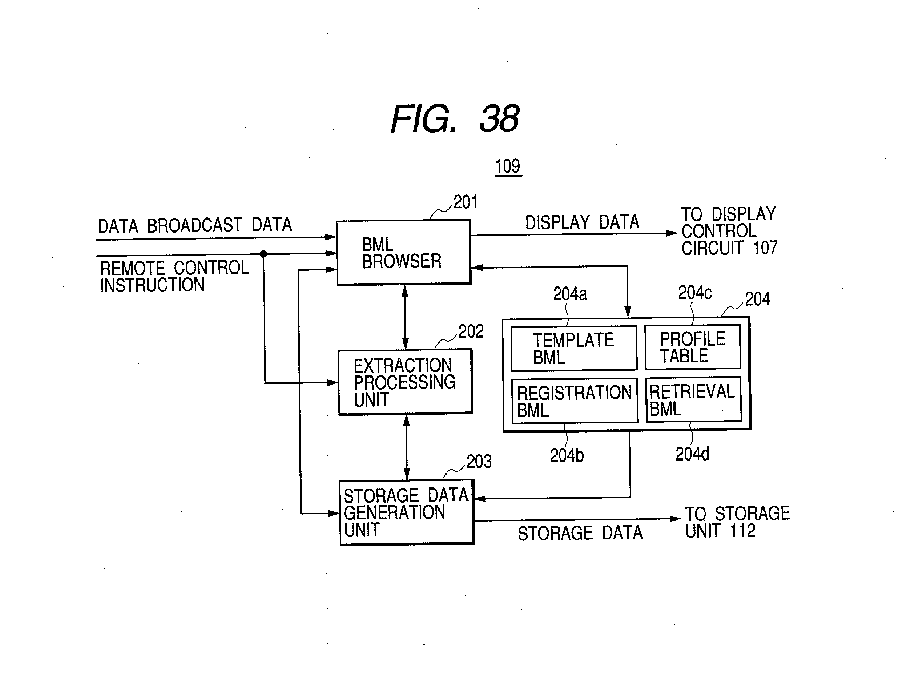

Fig. 38 is a view showing the configuration of a data broadcast processing circuit 109 in the present embodiment. The configuration shown in Fig. 38 is basically same as that shown in Fig. 2, but is different in that the data broadcast data are not directly supplied to the storage data generation unit 203.

Referring to Fig. 38, a BML document which is the currently displayed data of the data broadcast is selected as the extraction target BML document, and in case the extraction start key 601 provided in the remote controller R is operated during the display of the extraction target BML document, the extraction process unit 202 initiates an extraction process. The extraction process is same as explained in the first embodiment.

When an extraction element in the extraction target BML document is decided, the storage data generation unit 203 prepares a storage BML document based on such extraction element. The storage data generation unit 203 prepares the storage BML document utilizing the storage template BML document 204a stored in the memory 204, the DOM object 305 based on the extraction target BML document, and the extraction element information decided in the extraction process unit 202. The storage template BML document 204a is same as explained in the first embodiment.

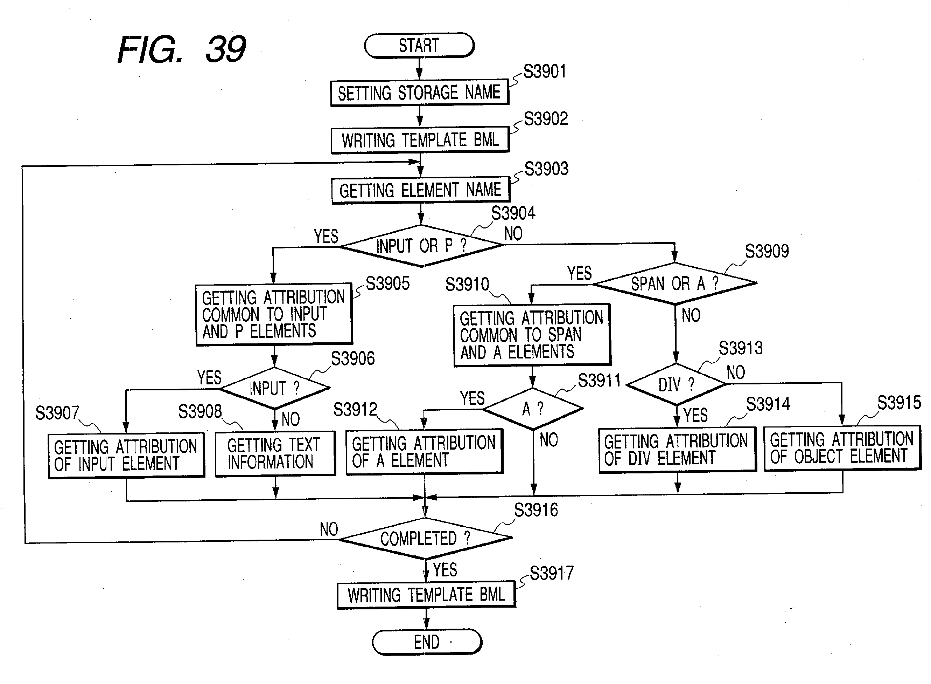

Fig. 39 shows a process flow in the storage data generation unit 203.

At first, when an extraction element is decided by the operation of the decision key 605 of the remote controller R, there is set a storage name for the storage BML document to be prepared (step S3901). Upon setting of the storage name of the storage BML document to be prepared, the storage template BML document 204a is used for copying a part from a start tag of the bml element to a start tag of the div element (part 1001 shown in Fig. 10) into the storage BML document in the internal memory (step S3902).

Then an element name of the element extracted by the extraction process unit 202 is specified (step S3903). The element name that can be specified in this operation is any of "object", "div", "p", "input", "span" and "a". As the extraction element information to be used for specifying the element name, there may be employed a an id attribute value of the extraction element, two values of an element name and an id attribute of the extraction element, or an object having all the attributes of the extraction element obtained from the DOM object 305. In the illustrated example, the element name becomes "div" based on such extraction element information and the DOM object.

Upon acquiring the element name of the extraction element, there are executed, for each kind of the element, acquisition and writing of the information necessary for preparing the storage BML document.

More specifically, a set value of a display-related attribute among the attributes of the element, text information (p element, span element or a element only) and an end tag of the element are acquired from the DOM object 305 and are written into the storage BML document.

The display-related attribute of the element includes an attribute common to six types or a part thereof, and an attribute specific to the element. Consequently the acquired information differs for each element. At first, in case the element is an input element or a p element (step S3904), set values of items common to these elements are acquired from the DOM object 305 and are written into the storage BML document (step S3905). In this operation, an end tag is also written.

The items to be acquired are those applicable to the input element and the p element among the CSS characteristics of the style attribute, such as arrangement properties (left property, top property etc.) and font properties (font-family property, font-size property etc.). However properties relating to focus movement (nav-index property etc.) need not be acquired, since the storage BML document is a part of the extraction target BML document so that a proper focus movement cannot be ensured when the storage BML document is reproduced and displayed.

In case of an input element (step S3906), a value of the value attribute is also acquired from the DOM object 305 and written into the storage BML document (step S3907). In case of a p element, text information is acquired and written into the storage BML document (step S3908).

In case the element is a span element or an a element (step S3909), set values of items common to these elements and text information are acquired from the DOM object 305 and are written into the storage BML document (step S3910). In this operation, an end tag is also written.

In case of an a element (step S3911), a value of the href attribute is also obtained from the DOM object 305 and is written into the storage BML document (step S3912).

Also in case the element is a div element (step S3913), a value of the CSS characteristics applied to this element is acquired and is written, together with an end tag, into the storage BML document (step S3914). In case the element is an object element, a value of the CSS characteristics applied to this element and values of data attribute, type attribute etc. are acquired and written, together with an end tag, into the storage BML document (step S3915).

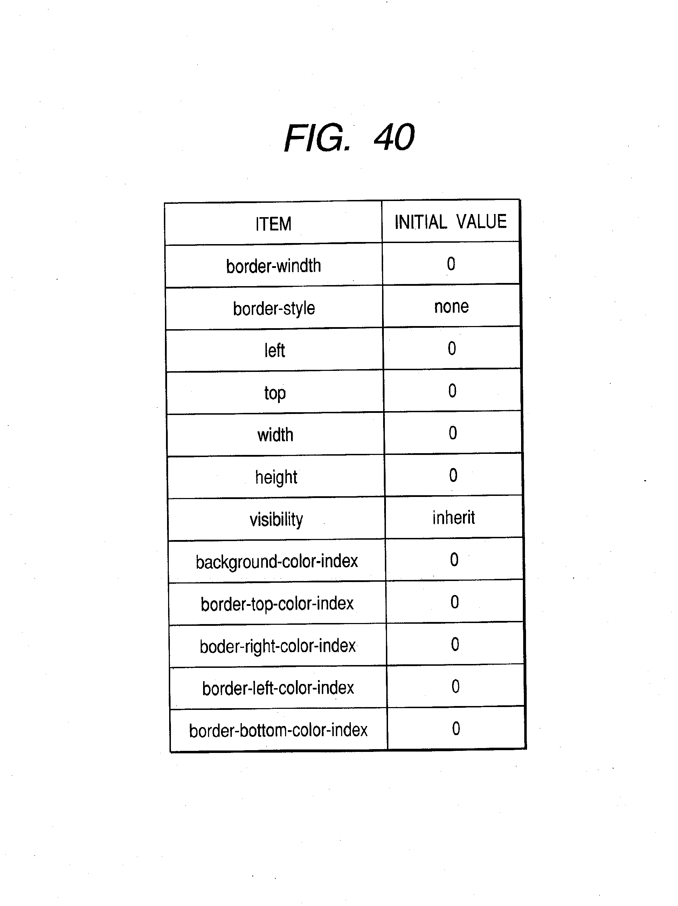

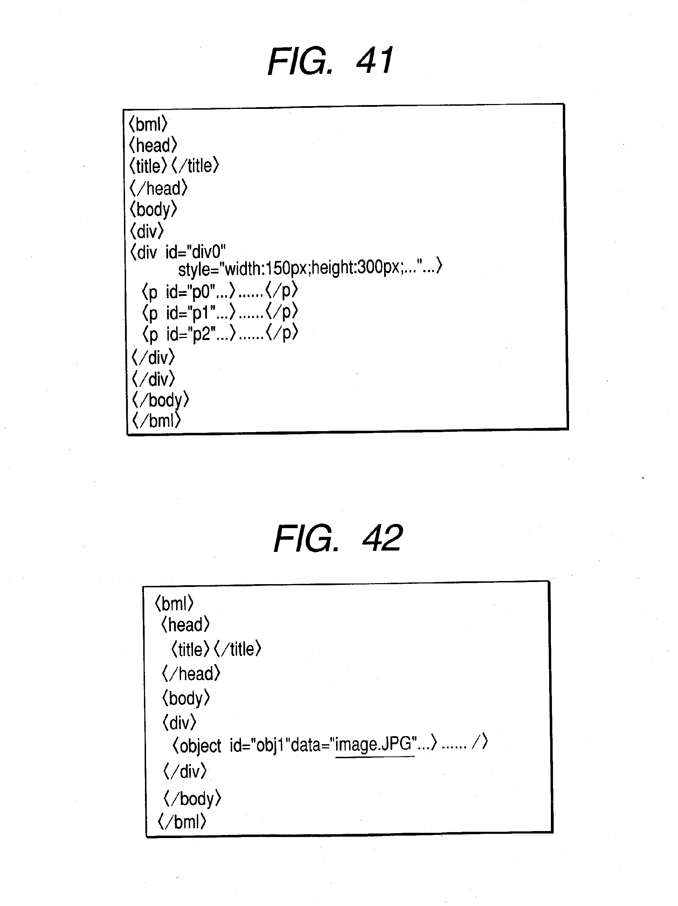

In an example shown in Fig. 8, a value of the CSS characteristics applied to a div element with id attribute "div0" is acquired and written into the storage BML document. The CSS characteristics applied to the div element are shown in Fig. 40. Also at this point, the storage BML document becomes a BML document shown in Fig. 41 from which the p element is excluded.

Upon completion of writing into the storage BML document for an element, there is discriminated whether there is another element to be written (step S3916).

In case the extraction process unit 202 extracts only one element, such element is called a reference element, and in case of extraction of plural elements, an element that does not have a parent element is called the reference element. In case the reference element does not have a child element, the storage template BML document 204a is used to write a part from an end tag of a div element to an end tag of a bml element (range 1002 in Fig. 10) into the storage BML document (step S3917).

In case the reference element has a child element which is not written in the storage BML document, the element name of such child element is specified. In case plural children elements are present, the element name is specified in succession from the first element. Also in case a child element (a) has a child element (b), there are at first executed a specifying of the element name of the child element (a), an acquisition of information thereof and a recording thereof into the storage BML document, and then the element name of the child element (b) is specified.

When all the elements of the reference element are written into the storage BML document, the storage BML document is outputted through the data bus 114 to the storage unit 112 and recorded therein. Fig. 41 shows a storage BML document generated by the above-described procedure from the extraction target BML document shown in Fig. 8.

As explained in the foregoing, the present embodiment prepares the storage BML document utilizing the storage template document 204a, the extraction element information from the extraction process unit 202 and the DOM object based on the extraction target BML document, and does not utilize the extraction target BML document employed in the first embodiment.

Consequently, in comparison with the storage BML document shown in Fig. 12, the storage BML document shown in Fig. 41 does not include an attribute not related to display (onclick attribute in Fig. 12) and properties relating to the focus movement among the CSS characteristics. Such attribute or property not related to the display need not be described in the storage BML document, and do not affect the display operation of the storage BML document in any way even if they are described.

As an example, the onclick attribute shown in Fig. 12 will be explained. A function "func()" designated by this attribute is called in case the decision key of the remote controller is operated while the div element is focused, but such onclick attribute need not be described in the storage BML document because there is no assurance that the div element is focused and therefore that the function is called by the operation of the decision key of the remote controller and also because, even if the function is called, the script element describing the behavior of the function is not contained in the storage BML document.

Therefore, according to the present embodiment, a part of the data broadcast image is extracted as storage data, and the information of the extracted element, the storage template BML document and the DOM object are used to write only the information relating to the display of the extracted element into the storage BML document, whereby the prepared storage BML document can be made free from unnecessary description and made smaller in the capacity thereby increasing the safety of the display operation of the storage BML document.

In the following there will be explained a process for generating a storage BML document in case the extraction element includes an element referring to monomedia, namely an object element shown in Fig. 4.

In a data broadcast program shown in Fig. 4, let it be assumed that an object element 5 is decided as the extraction element. It corresponds, in the extraction target BML document shown in Fig. 8, to an object element with id attribute "obj1". The type attribute of this object element has a value "image.JPG" as shown in Fig. 8. It indicates, in case the program containing the extraction target BML document has a data configuration formed by plural modules, that monomedia data of a name "image.JPG" and the extraction target BML document belong to a same module.

In case a module to which the extraction target BML document belongs has an ID "0000" and a module to which the data "image.JPG" belong has an ID "0001", the data attribute assumes a value "∼/0001/image/JPG". It is thus possible to know, from the value of the data attribute, a relationship between a referring source of the monomedia (extraction target BML document and a referring target of the monomedia (data "image.JPG").

Consequently, the value of the data attribute indicating the referring target of the monomedia in the storage BML document becomes "image.JPG" in case the storage location of the monomedia data is same as that of the storage BML document, for example within a same directory in the storage unit 112 shown in Fig. 1, but it becomes "monomedia://image.JPG" in case such storage location is a location prepared by the storage data generation unit 203 as reference from the storage BML document, for example an area designated by "monomedia" in the storage unit 112. Thus the monomedia data may be stored in a location for reference other than the storage unit 112, but such location has to be accessible by the data broadcast processing circuit 109 at the reproduction of the storage BML document.

In the present embodiment, in writing the object element at the generation of the storage BML document in the storage data generation unit 203, the value of the data attribute is so determined that an area decided by the data broadcast reception apparatus 100 in advance becomes the reference target. Also the data are so moved or copied that the monomedia data are retained in such area.

The moving or copying of the monomedia data to the specified area may be executed at a timing when the data attribute is designated or written by the storage data generation unit 203, or when an element including the object element is decided as the extraction element by the extraction process unit 202.

In the example shown in Fig. 8, in case an object element with id attribute "obj1" is selected as the extraction element, the generated storage BML document becomes as shown in Fig. 42. In the storage BML document shown in Fig. 42, the monomedia data are placed in an area specified by "monomedia". In case such storage BML document is reproduced from the storage unit 112 and processed and displayed by the data broadcast processing circuit 109, the BML browser 201 refers to the data "image.JPG" in the area specified by "monomedia", and generates display image data based on the designated style information.

As explained in the foregoing, in the generation of the storage BML document, by selecting the reference target of the monomedia at an area decided by the data broadcast reception apparatus 100 and by moving or copying the monomedia in such area, it is possible to obtain the monomedia data which are referred to by the storage BML document even in case the extraction target element includes an element referring to the monomedia.

### Fifth embodiment

In the following there will be explained a fifth embodiment.

In the foregoing first to fourth embodiments, there has been explained a case of extracting a part of a structured document constituting the data broadcast data which are broadcasted by a digital television broadcasting, and storing such part as a structured document. In the present embodiment, there will be explained a case of storing, in addition to such data broadcast data, other monomedia data as a structured document.

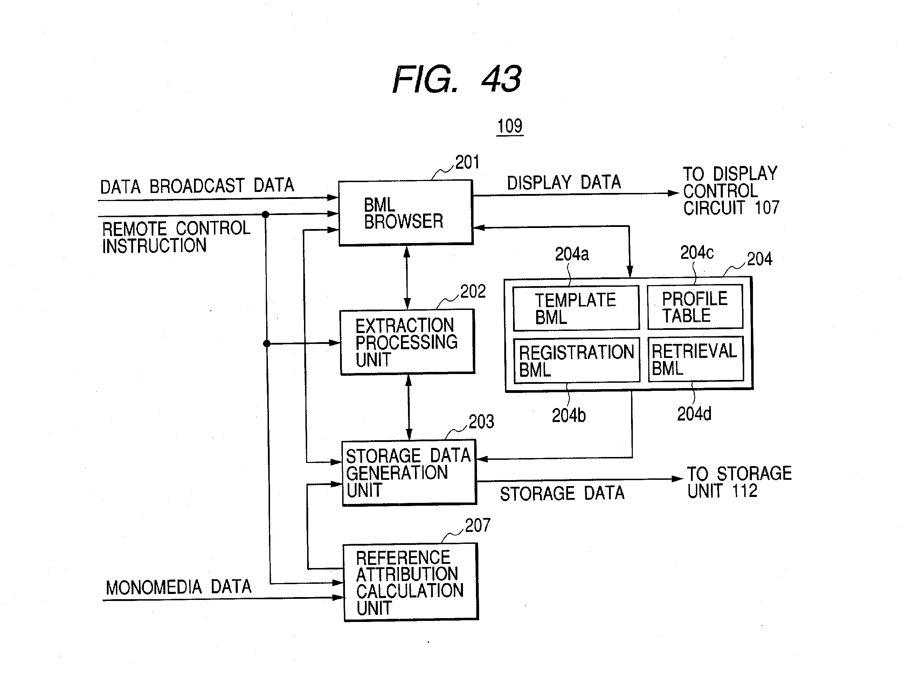

Also in the present embodiment, the configuration of the television receiver is similar to that shown in Fig. 1, and the basic process thereof is also similar to that of the foregoing embodiments. Fig. 43 shows a configuration of a data broadcast processing circuit 109, which is capable, in addition to the functions explained in the foregoing first and fourth embodiments, of storing monomedia data such as image data or audio data entered from the external I/F 113 shown in Fig. 1 or monomedia data reproduced from the storage unit 112, as a storage BML document.

In case an extraction key 601 of the remote controller R is operated by the user while monomedia data are displayed, for example by reproducing still image data stored in the storage unit 112 and displaying such data on the display unit 108 through a process by an unrepresented decoder, a reference attribute calculation unit 207 shown in Fig. 43 calculates an attribute value required for referring to such monomedia data from an object element.

The monomedia data contemplated herein are assumed to be data of a kind reproducible by the BML browser 201 of the data broadcast processing circuit 109, and a reproduction state of the monomedia data means an image display in case of data of a moving image, a still image or a text, while a reproduction state of audio data means a reproduction in a state in which data of a moving image, a still image or a text are not displayed on the image screen.

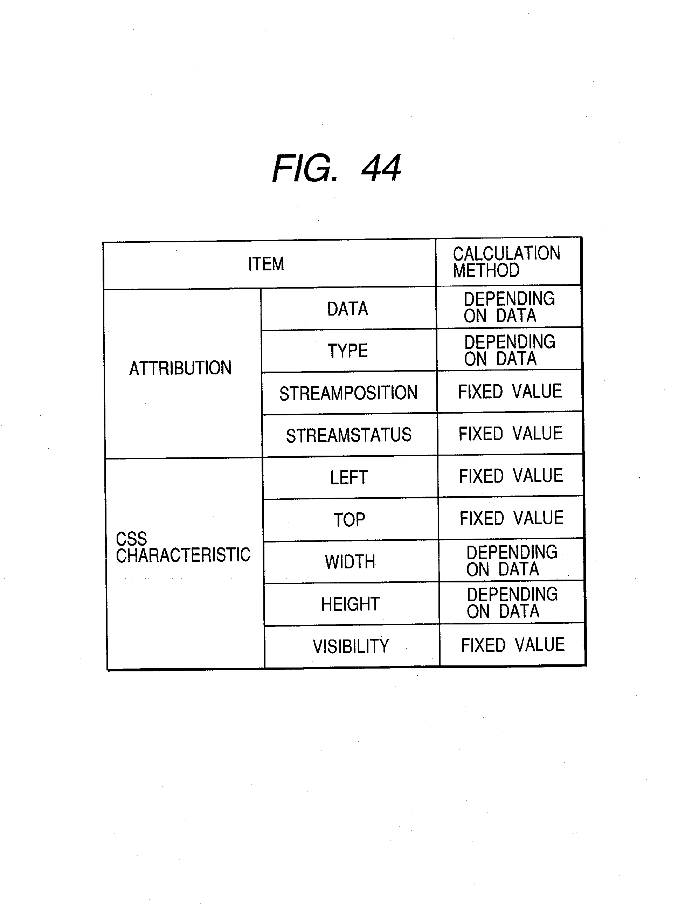

The reference attribute calculation unit 207 acquires a part of the necessary attribute values from the monomedia data, also acquires a remaining part from predetermined fixed values and writes these values into the storage BML document. Fig. 44 shows attributes required in referring to the monomedia with a structured document.

Among the attributes shown in Fig. 44, values of the attributes dependent on the monomedia data are values acquired through a decoder for the monomedia data or values obtained by converting the above-mentioned values into an applicable range of the BML browser 201. For example, in case the monomedia data are still image data "image.JPG" of a JPEG format, a width property of the monomedia data for a horizontal pixel number 300 assumes a value 150 px (960 × 540 coordinate system) or 300 px (720 × 480 coordinate system). Also a value of the data attribute is selected in an area accessible by the BML browser 201, such as "monomedia://image.JPG", and the monomedia data are moved or copied into such area.

A data name (for example "image.JPG") designated in the data attribute may be assigned from a name already given to the monomedia data, or by a remote controller operation in another image or another window for data name setting. The moving or copying of the monomedia data into the specified area may be executed at a timing when the value of the data attribute is calculated by the reference attribute calculation unit 207 or when the data attribute is written by the storage data generation unit 203.

When the reference attribute calculation unit 207 calculates the attribute value for referring to the monomedia data to be stored, the storage data generation unit 203 sets a storage name for the storage BML document to be prepared. Upon setting of the storage name of the storage BML document to be prepared, the storage template BML document 204a stored in the memory 204 is used to write a part from a start tag of a bml element to a start tag of a div element (range 1001 in Fig. 10) into the storage BML document.

Then, based on the attribute value calculated by the reference attribute calculation unit 207, the object element is written into the storage BML document. In case the monomedia data to be stored are audio data, a script for requesting the start of reproduction of the audio data and an element for calling the script may also be written into the storage BML document.

In succession, the storage template BML document 204a is used to write a part from an end tag of a div element to an end tag of a bml element (range 1002 in Fig. 10) into the storage BML document. Upon completion of the preparation of such storage BML document, the storage data generation unit 203 stores the storage BML document in the storage unit 112.

In case of reproducing the storage BML document from the storage unit 112 and displaying on the display unit 108 through a processing by the data broadcast processing circuit 109, the BML browser 201 refers to the monomedia data in the area designated by the data attribute of the object element and generates display image data based on the designated style information.

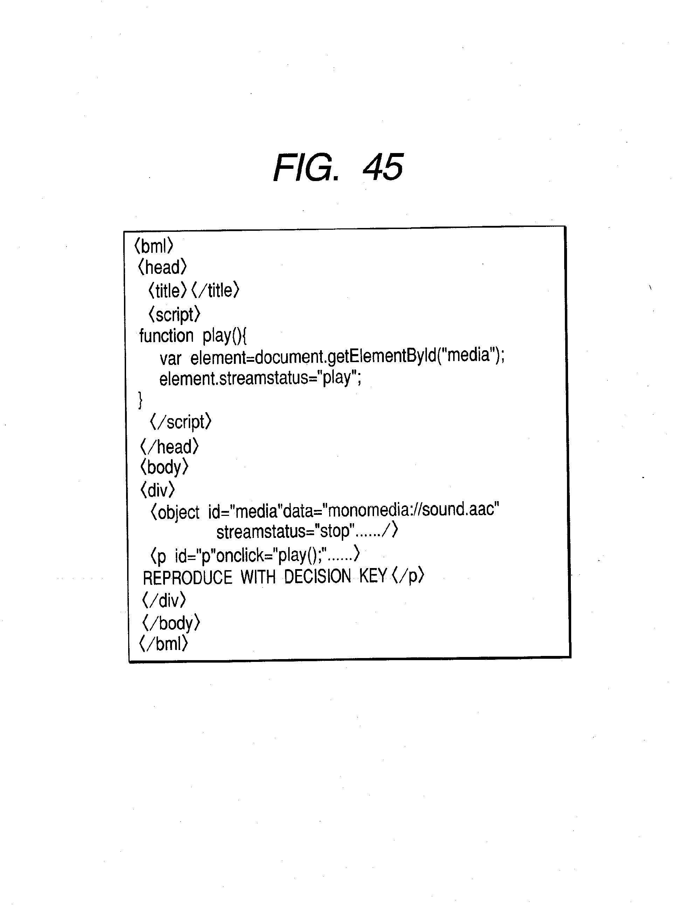

Fig. 45 shows an example of the storage BML document which refers to audio data. In this example, by operating the decision key 605 of the remote controller R, there is called a script for changing a streamstatus attribute of the object element to "play", thereby starting a reproduction of the audio data.

As explained in the foregoing, the present embodiment calculates information required in referring to monomedia data from a structured document and stores an object element, for referring to the monomedia data based on such reference information, as a BML document, whereby an arbitrary monomedia other than the data broadcast can be stored as a BML document.

Therefore, in case the digital broadcast reception apparatus is capable of receiving for example still image data from a digital camera or the like, such data can be stored in a structured document same as that for the data broadcast and can therefore be handled as an extension of television operations by the remote controller.

In the present embodiment, in case the storage BML document is generated from the monomedia data, there is not executed a registration process in the profile table 204c utilizing the registration BML document 204b or a retrieval process utilizing the retrieval BML document 204d, explained in the first embodiment.

### Sixth embodiment

In the following there will be explained a sixth embodiment.

In the sixth embodiment, there will be explained a case of storing monomedia data, other than the data broadcast but reproducible by the data broadcast processing circuit 109, as a structured document. The present embodiment is capable of storing, as a structured document, by converting an arbitrary display image in a program other than a data broadcast program into a still image.

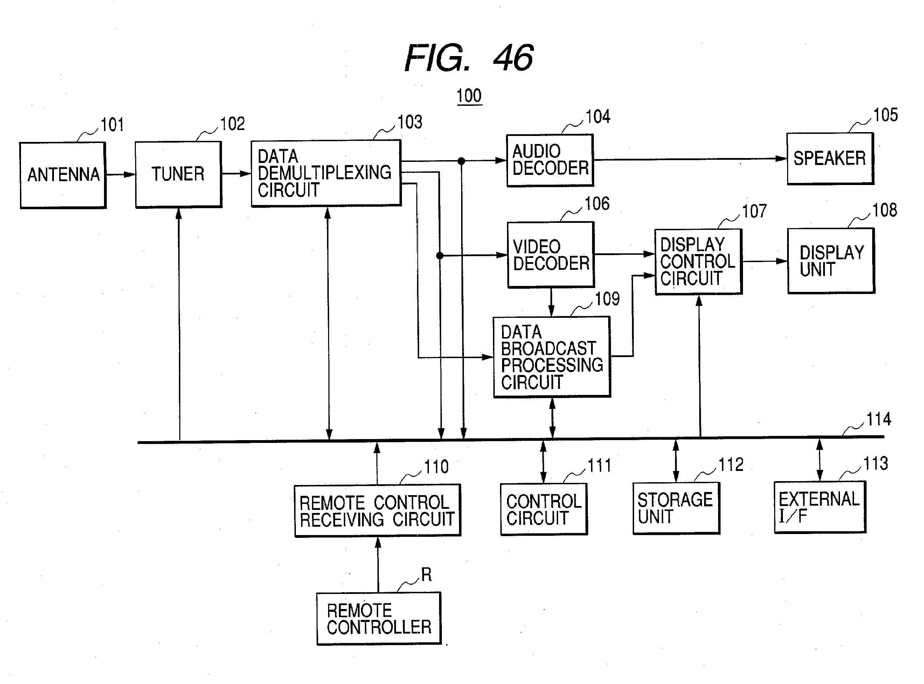

Fig. 46 is a view showing the configuration of a digital broadcast reception apparatus 100 of the present embodiment, which is similar in the configuration and in the basic functions to the apparatus shown in Fig. 1 except that the image data decoded by the image decoder 106 are also supplied to the data broadcast processing circuit 109, so that detailed explanation will be omitted.

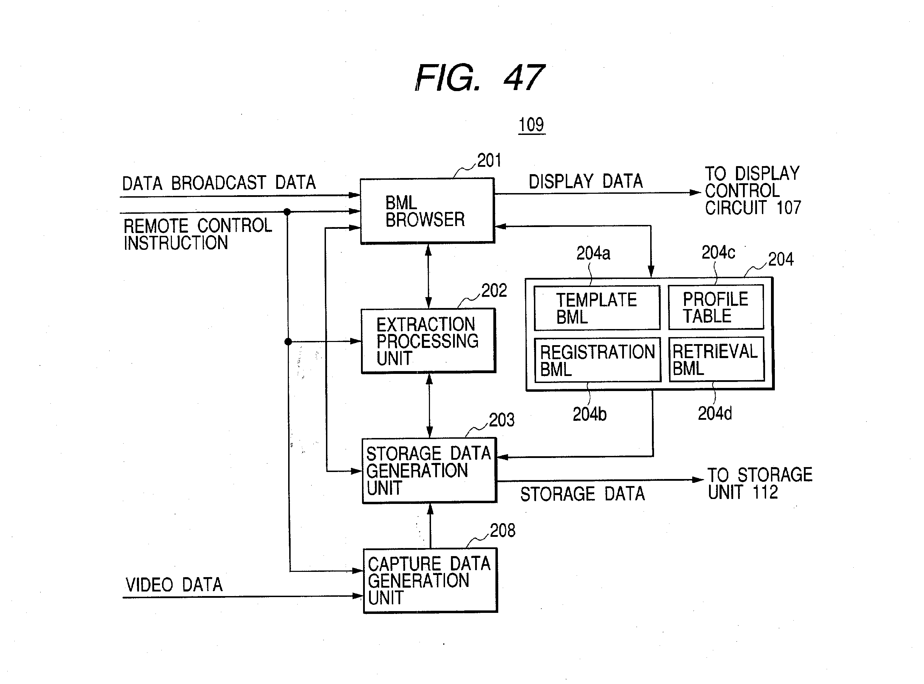

Fig. 47 shows the configuration of a data broadcast processing circuit 109 of the present embodiment. The data broadcast processing circuit 109 shown in Fig. 47 has, in addition to the functions of the data broadcast processing circuit of the first embodiment, a function of storing a display image of a program, other than the data broadcast, outputted from the image decoder 106 as a structured document. In the following there will be explained a process for generating a storage BML document by the data broadcast processing circuit 109 shown in Fig. 47, based on output data from the image decoder 106.

Referring to Fig. 47, in case an extraction key 605 of the remote controller R is operated while the digital broadcast reception apparatus receives and displays a program other than the data broadcast, a capture data generation unit 208 extracts still image data, based on a display image on the display unit 108 at the operation of the extraction key 605, from image dat outputted from the image decoder 106, and generates information for referring to such still image data from a structured document.

The still image data generated by the capture data generation unit 208 may be any still image data reproducible by the BML browser 201, and there may be employed any method of generation. The generated still image data are retained in a predetermined area accessible by the digital broadcast receiver 100, such as the storage unit 112. The information for reference from the structure document, generated by the capture data generation unit 208, is information relating to the attribute of the object element shown in Fig. 44 and the CSS characteristics.

However, in case the still image data generated by the capture data generation unit 208 have a fixed horizontal pixel number and a fixed vertical pixel number, the width property and the height property also become fixed. A value of the data attribute designates an area in which the prepared still image data are retained, and a data name ("event00.JPG" for a data attribute "capture://event00.JPG") may be assigned from a program information such as EPG, or by a remote controller operation in another image or another window for data name setting.

When the capture data generation unit 208 generates the still image data based on the display image and the attribute value for reference, the storage data generation unit 203 sets a storage name for the storage BML document. Upon setting of the storage name of the storage BML document, the storage template BML document is used to write a part from a start tag of a bml element to a start tag of a div element into the storage BML document.

Then, based on the attribute value generated by the capture data generation unit 208, the object element is written into the storage BML document. In succession, the storage template BML document is used to write a part from an end tag of a div element to an end tag of a bml element into the storage BML document.

In case of reproducing the storage BML document from the storage unit 112 and displaying on the display unit 108 through a processing by the data broadcast processing circuit 109, the BML browser 201 refers to the image data in the area designated by the data attribute of the object element and generates display image data based on the designated style information.

As explained in the foregoing, the present embodiment allows to store, as a structured document, a display image of an ordinary television program in addition to that of the data broadcast data.

In the present embodiment, in case of recording the storage BML document generated from the display image of an ordinary television broadcasting, there is not executed a registration process in the profile table 204c utilizing the registration BML document 204b or a retrieval process utilizing the retrieval BML document 204d, explained in the first embodiment.

In the foregoing embodiments, there has been explained a case of extracting a selected portion in the data broadcast data described in the BML format and storing it in the BML format, but a similar process is also applicable to a structured document of other than the BML format.

The present invention also includes a case of storing software program codes for realizing the processes of the foregoing embodiments in a computer applicable to the digital broadcast receiver in the foregoing embodiments and executing such program codes. Also such program codes and a memory medium (floppy disk, hard disk, optical disk, magnetooptical disk, CD-ROM, magnetic tape, non-volatile memory card, ROM etc.) storing such program codes constitute the present invention.

Many widely different embodiments of the present invention may be constructed without departing from the spirit and scope of the present invention. It should be understood that the present invention is not limited to the specific embodiments described in the specification, except as defined in the appended claims.

## Claims

1. A receiving apparatus comprising:
reception means which receives a television broadcast wave including broadcast data described by a structured document;
broadcast data processing means which processes the structured document of the broadcast data received by said reception means to generate image data for display;
selection means which selects an arbitrary area in a display image corresponding to the broadcast data received by said reception means; and
structured document process-generation means which generates selected structured document data for displaying the selected area in the structured document of the received broadcast data, on the basis of the structured document in a portion corresponding to the selected area.

2. An apparatus according to claim 1, wherein
said structured document processing means extracts a portion corresponding to the selected area from the structured document in the received broadcast data and generates the selected structured document data utilizing the extracted structured document.

3. An apparatus according to claim 1, wherein
said broadcast data processing means includes structured document interpreting means which interprets said structure document, and said structured document processing means generates the selected structured document data utilizing the structured document information generated by said structured documents interpreting means, on the basis of the structured document of a portion corresponding to the selected area.

4. An apparatus according to claim 3, wherein
said structured document processing means generates the selected structured document data utilizing, among said structured document information, only information relating to display of an element of the structured document in a portion corresponding to the selected area.

5. An apparatus according to claim 1, wherein
said structured document processing means generates the selected structured document data utilizing a patterned structured document described by the structured document.

6. An apparatus according to claim 5, wherein
the patterned structured document includes a body element and a div element among displayable elements, and style information held by said div element designates an entire area of the displayable image area.

7. An apparatus according to claim 5, wherein
said structured document processing means extracts a portion corresponding to the selected area from the structured document in the received broadcast data and generates the selected structured document data by inserting the extracted structured document in the patterned structured document.

8. An apparatus according to claim 1, wherein
in case the structured document in a portion corresponding to the selected area includes an element which refers to monomedia, said structured document processing means stores the monomedia in a predetermined storage location and sets at the predetermined storage location, a designated reference location of the element referring to the monomedia in the structured document data.

9. An apparatus according to claim 1, wherein
said selection means is capable of selecting an arbitrary area among plural predetermined areas respectively corresponding to plural elements in said structured document.

10. An apparatus according to claim 1, further comprising:
memory means which stores the selected structured document data;
wherein said broadcast data processing means further generates image data for the display, on the basis of the selected structured document data read out from said memory means.

11. An apparatus according to claim 1, wherein said structured document processing means further generates a profile table formed by profile data relating to a structured document on the selected area.

12. An apparatus according to claim 11, wherein
said structured document processing means generates the profile data on the basis of structured document data for registration.

13. An apparatus according to claim 12, wherein
said structured document processing means has a script executing function for adding the profile data to the profile table, and the structured document data for registration include a description for calling said script executing function in response to a selecting operation by said selection means.

14. An apparatus according to claim 11, wherein
said structured document processing means stores the selected structured document data in a storage device, and the profile data include storage location information for specifying a storage location of the selected structured document data.

15. An apparatus according to claim 14, wherein
said structured document processing means further retrieves the selected structured document data stored in said storage device utilizing the profile table.

16. An apparatus according to claim 15, wherein
said structured document processing means retrieves the selected structured document on the basis of the structured document data for retrieval.

17. An apparatus according to claim 16, wherein
said structured document processing means has a script executing function for retrieving the stored selected structured document data, and the structured document data for retrieving includes a description for calling said script executing function in response to an instruction for starting retrieval.

18. An apparatus according to claim 16, wherein
said structured document processing means has result document generation means for generating a structured result document, and the structured document data for retrieving includes a description for calling a script executing function for transferring a result of the retrieval to the result document generation means.

19. An apparatus according to claim 18, wherein
the result document generation means generates the structured result document utilizing a patterned result document.

20. An apparatus according to claim 19, wherein
the selected structured document data, the structured document data for retrieving and the structured result document data have a format similar to that of the structured document in the broadcast data.

21. A receiving apparatus according to claim 1, further comprising:
storage means which stores the selected structured document data; and
list document processing means which generates list display image data showing a list of said plural selected structured document data stored by said storage means, on the basis of structured list document data and changes the content of the structured list document.

22. An apparatus according to claim 21, wherein
said structured document processing means supplies said list document processing means with attribute information including a document name of the selected structured document data, and said list document processing means registers the attribute information anew in the structured list document thereby changing a content thereof.

23. An apparatus according to claim 21, wherein
the structured list document includes a script element having a predetermined number of scripts corresponding respectively to the selected structured document data, and includes a p element or an object element corresponding to each script.

24. An apparatus according to claim 23, wherein
said structured list document includes a predetermined number of a elements corresponding respectively to the selected structured document.

25. An apparatus according to claim 21, wherein
the structured list document includes an element and a script for switching to a list display image relating to another structured list document.

26. An apparatus according to claim 25, wherein
said list document processing means generates the structured list document data for each of a predetermined number of the selected structured document data.

27. An apparatus according to claim 21, further comprising:
reproduction means for reproducing a designated structured document among the selected structured documents displayed by the list;
wherein said broadcast data processing means further generates display image data relating to the reproduced selected structured document data.
